# EUROPEAN PATENT SPECIFICATION

(11) **EP 2 461 585 B1**
(45) Date of publication and mention of the grant of the patent: **26.06.2013**
(21) Application number: 12156952.9
(22) Date of filing: 28.09.2007
(51) Int. Cl.: H04N 7/173

(54) **Management of profiles for interactive media guidance applications**
Verwaltung von Profilen für interaktive Medienführungsanwendungen
Gestion des profils pour les applications de guidage de média interactif

(30) Priority: 29.09.2006 US 541245; 29.09.2006 US 541319; 29.09.2006 US 541243
(43) Date of publication of application: 06.06.2012
(62) Divisional of application: 07838976.4
(73) Proprietor: United Video Properties, Inc., Santa Clara, CA 95050 (US)
(72) Inventor: Starkenburg, Michael Ross, Costa Mesa, CA California 92627 (US); Kellogg-Smith, Peter, Issaquah, WA Washington 98027 (US); Ferrone, Andrew, Santa Monica, CA California 90405 (US); Shannon, Steve, Pacific Palisades, CA California 90272 (US)
(74) Representative: Korenberg, Alexander Tal

(56) References cited:
- EP-A- 1 280 122
- EP-A- 1 387 272
- WO-A-01/86511
- WO-A-2004/059528
- US-A1- 2004 215 757
- US-B1- 6 345 279

## Description

### Background of the Invention

This invention relates to the management of user profile information for interactive media guidance systems including multiple user equipment devices. The invention also relates to the management of scheduled recordings. In addition, the invention relates to providing to a user equipment device profile information acquired from other devices and media content recommendations based on user interactions with other devices.

Users of media guidance devices and applications use increasing numbers and varieties of user equipment devices and guidance applications to access media content. A single user may, for example, access media content from multiple user equipment devices such as multiple television devices. The user may, in addition, access media content from user equipment devices of different types including television devices, portable media-players, and cell-phones, for example. Each device used by the user, including devices of different types, different devices of the same type, and identical devices, may have a different media guidance application interface. A user may therefore have to familiarize herself with a new application interface each time she seeks media guidance on a new device. The process of familiarizing herself with the new application interface may hinder the user's ability to locate and access media efficiently and to learn to use the new device. Users may benefit from having a common media guidance application interface for all their user equipment devices. The common media guidance environment and interface may allow users to identify and access media more efficiently and intelligently, and to learn to use new devices and features more quickly.

Interactive media guidance applications may provide users with the opportunity to customize the appearance their media guidance interfaces. However, the customization options may be limited. Users may, for example, customize basic features of display screens of guidance applications, such as display colors and sizes. Users may benefit from greater customization options to customize both the appearance and the functionality of media guidance interfaces. Additional customization options may include the ability to customize guidance menus, for example, to include or hide menu options. Customization options may enable users to customize media content listings in order to feature media content of interest or potential interest to the user. Customization options may also enable users to customize the functionality of the guidance applications, for example to automatically access or record media content or to provide the user with reminder messages for media programs. Information about a particular user's customization preferences for a media guidance application may be stored in a user profile stored on a user equipment device running the media guidance application.

The customization of a user's media guidance application may take considerable time and effort because of the large number of customization options the user may have to select. Users may benefit from having customization information automatically gathered by monitoring the users' interactions with media guidance interfaces. The monitoring of user interactions may allow media guidance applications to automatically identify media content of interest to users based on media content users have watched, for example.

Because user equipment devices usually store user profile information on local memories, and because user equipment devices are not configured to share user profile information, users may be forced to individually configure each user equipment device they use. Users may have to repeatedly enter user profile information into devices each time they acquire a new device and each time they replace an old device with a new one. Users of media guidance applications may therefore benefit from user equipment devices capable of sharing user profile information, thereby allowing users to have customized user interfaces on multiple devices without having to provide each device with customization information. In addition, users may benefit from being able to receive a recommendation of program content on a first device based on the user's interactions with a second device.

Because user equipment devices generally operate as standalone devices, a user seeking media guidance on an equipment device may be limited to the functionality of that user equipment device. The user may not, for example, record media content if the user is receiving media guidance on a user equipment device that is not capable of recording media content. A user may therefore benefit from user equipment devices sharing functionalities, thereby enabling the user to schedule from one device a recording on another device. It may additionally be beneficial to allow a user of a first equipment device to record media content on a second equipment device that is more suitable for performing the recording than the first equipment device.

Users may therefore benefit from systems and methods for providing common media guidance applications and interfaces on different user equipment devices including equipment devices of different types. Users may additionally benefit from systems and methods for centrally managing user profile information on multiple user equipment devices. The common media guidance applications and the central management of user profile information may provide additional functionalities of benefit to the users as described below.

WO 01/86511 relates to a Photographic Server System that implements a methodology for providing access to photographic images.

The present invention is set out in the independent claims, with some optional features set out in the claims dependent thereto.

### Summary of the Invention

In accordance with the principles of the present invention, methods and systems for the management of user profile information are provided.

Methods and systems are also provided for recording media content on the most suitable user equipment of a user's media network. A user's media network may be associated with one or more user equipment devices which the user may use to access media content using interactive media guidance applications. A user profile server may store user profile information including information about the resources of a plurality of user equipment devices associated with the user's media network. In response to a request associated with the user's media network to record media content, the most suitable device of the media network for performing the recording may be identified. The suitability of devices may be evaluated in terms of, for example, the devices' availability at the time of the recording, the amount of storage space they have available, as well as other appropriate criteria. The suitability may also be evaluated in terms of the definition capabilities (high definition, standard definition) or quality of recording the devices can provide. The suitability of devices may also be evaluated in terms of the device's ability to perform series recording, and the device's future availability (or expected future availability) to perform series recording. The suitability of devices may also be evaluated in terms of whether the devices are generally available or unavailable, or whether devices are generally available during particular periods of the day or week. Once the most suitable device is identified, the user profile server may transmit to the device a message to record the media content.

Methods and systems are also provided for providing recommendations to a user based on the user's monitored interactions with a plurality of user equipment devices. Information about the user's interactions with a plurality of user equipment devices may be stored in user profile information on a user profile server. The user profile information including the information about the user's interactions may be processed in order to identify media content to be recommended to the user. The profile server may transmit to a user equipment device of the network a recommendation of the identified media content.

Methods and systems are also provided for providing user profile information to user equipment devices of a media network using a server of the network. User profile information for a user media network including a plurality of user equipment devices may be stored on a user profile server. A device that does not have the user profile information may be identified, and the user profile information may be transmitted to the device. The type of a device may be determined, and user profile information stored on the server and corresponding to the type of the device may be identified and transmitted to the device.

### Brief Description of the Figures

Further features of the invention, its nature and various advantages, will be more apparent from the accompanying drawings and the following detailed description.

FIG. 1 shows an illustrative grid program listings display screen in accordance with one embodiment of the present invention.

FIG. 2 shows an illustrative video mosaic program listings display screen in accordance with one embodiment of the present invention.

FIG. 3 shows an illustrative login picture-in-picture display screen in accordance with one embodiment of the present invention.

FIG. 4 shows an illustrative picture-in-picture user media network viewing display screen in accordance with one embodiment of the present invention.

FIG. 5 shows an illustrative program listings display screen in accordance with one embodiment of the present invention.

FIG. 6 shows an illustrative record-setup picture-in-picture display screen in accordance with one embodiment of the present invention.

FIG. 7 shows a generalized embodiment of an illustrative user equipment device in accordance with one embodiment of the present invention.

FIG. 8 shows a generalized embodiment of an illustrative interactive media guidance system in accordance with one embodiment of the present invention.

FIG. 9 is a diagram of an illustrative profile data structure in accordance with one embodiment of the present invention.

FIG. 10 is a diagram of an illustrative user media network data structure in accordance with one embodiment of the present invention.

FIG. 11 is a diagram of an illustrative profile information data structure in accordance with one embodiment of the present invention.

FIG. 12 is a diagram of an illustrative personalization information data structure in accordance with one embodiment of the present invention.

FIG. 13 is a diagram of an illustrative media content information data structure in accordance with one embodiment of the present invention.

FIG. 14 shows an illustrative flow diagram for logging in to a user's media network in accordance with the present invention.

FIG. 15 shows an illustrative flow diagram for synchronizing user profile information on a user's media network in accordance with the present invention.

FIG. 16 shows an illustrative flow diagram for transmitting user profile information to user equipment devices in accordance with the present invention.

FIG. 17 shows an illustrative flow diagram for transmitting user profile information to user equipment devices in accordance with the present invention.

FIG. 18 shows an illustrative flow diagram for setting up a recording on a user's media network in accordance with the present invention.

FIG. 19 shows an illustrative flow diagram for setting up a recording on a user's media network in accordance with the present invention.

FIG. 20 shows an illustrative flow diagram for providing a recommendation to a user in accordance with the present invention.

### Detailed Description of the Preferred Embodiments

The amount of media available to users in any given media delivery system can be substantial. Consequently, many users desire a form of media guidance through an interface that allows users to efficiently navigate media selections and easily identify media that they may desire. An application which provides such guidance is referred to herein as an interactive media guidance application or, sometimes, a media guidance application or a guidance application.

Interactive media guidance applications may take various forms depending on the media for which they provide guidance. One typical type of media guidance application is an interactive television program guide. Interactive television program guides (sometimes referred to as electronic program guides) are well-known guidance applications that, among other things, allow users to navigate among and locate many types of media content including conventional television programming (provided via traditional broadcast, cable, satellite, Internet, or other means), as well as pay-per-view programs, on-demand programs (as in video-on-demand (VOD) systems), Internet content (e.g., streaming media, downloadable media, Webcasts, etc.), and other types of media or video content. Guidance applications also allow users to navigate among and locate content related to the video content including, for example, video clips, articles, advertisements, chat sessions, games, etc.

With the advent of the Internet, mobile computing, and high-speed wireless networks, users are accessing media on personal computers (PCs) and other devices on which they traditionally did not, such as hand-held computers, personal digital assistants (PDAs), portable media players (MP3 players), mobile telephones, in-car television devices, or other mobile devices. On these devices users are able to navigate among and locate the same media available through a television. Consequently, media guidance is necessary on these devices, as well. The guidance provided may be for media content available only through a television, for media content available only through one or more of these devices, or for media content available both through a television and one or more of these devices. The media guidance applications may be provided as on-line applications (i.e., provided on a web-site), or as stand-alone applications or clients on hand-held computers, PDAs, mobile telephones, or other mobile devices. The various devices and platforms that may implement media guidance applications are described in more detail below.

In order to enhance users' ability to identify and access media using interactive media guidance applications, the guidance applications may be customized. User personalization options, user preference options, and information about user selected media content may be used to modify the appearance and functioning of the guidance application and of the media content the application provides guidance to. Personalization options may include configuration information allowing users to customize the appearance and functioning of the guidance application. The configuration information may, for example, allow the user to decide what menus are displayed by the guidance application and how the menus operate. Preference options may include information about users' media preferences including information about users' preferred media content (e.g., "The Simpsons"), preferred categories of media (e.g., drama, action), or preferred types of media (e.g., cartoons, movies). The preference information may, for example, be used to provide the user with recommendations of media content likely to be of interest to the user. Information about user selected media content may include lists of media content watched by the user, recorded by the user, or identified by the user as being of interest. This media content information may also include recordings of the listed media content, or of media content related to the listed media content. Each user's personalization information, preference information and media content information may be stored in a user profile associated with the user.

As users access media content from increasing numbers of devices, a need has developed to standardize the look and feel of the media guidance applications running on the different devices and to allow the devices to share user profile information. The present invention provides methods and systems for managing users' profile information for multiple devices.

A user, as referred to herein, may be an individual user or a group of users such as the members of a family or a group of friends, for example. A user may use multiple user equipment devices, such as a television, a cell-phone and a portable media player, to access media content. The user equipment devices used by the user form the user's media network. The user's media network may be a home network including, for example, the user's television and personal computer connected through the user's WIFI home network. Alternatively, the user's media network may include user equipment devices connected through the Internet or third-party networks including television service provider networks and cell-phone networks, for example. The user's media network may include equipment devices that are only used by the user, such as the user's cell-phone. The user's media network may also include shared equipment, such as a television used by multiple members of a household.

User profile information for the user equipment devices of a user's media network may be shared between the devices to coordinate the media guidance provided to the user on each device. The coordination may include sharing user configuration information in order to provide a common or similar media guidance interface on all of the user's devices. The coordination may also include sharing preference information in order to provide coordinated media content recommendation on the devices. The coordination may include sharing media content information, to allow a user to access recorded content from multiple devices. The coordination may provide additional functionality, such as allowing the user to remotely communicate with or control devices on the user's media network using another device on the network.

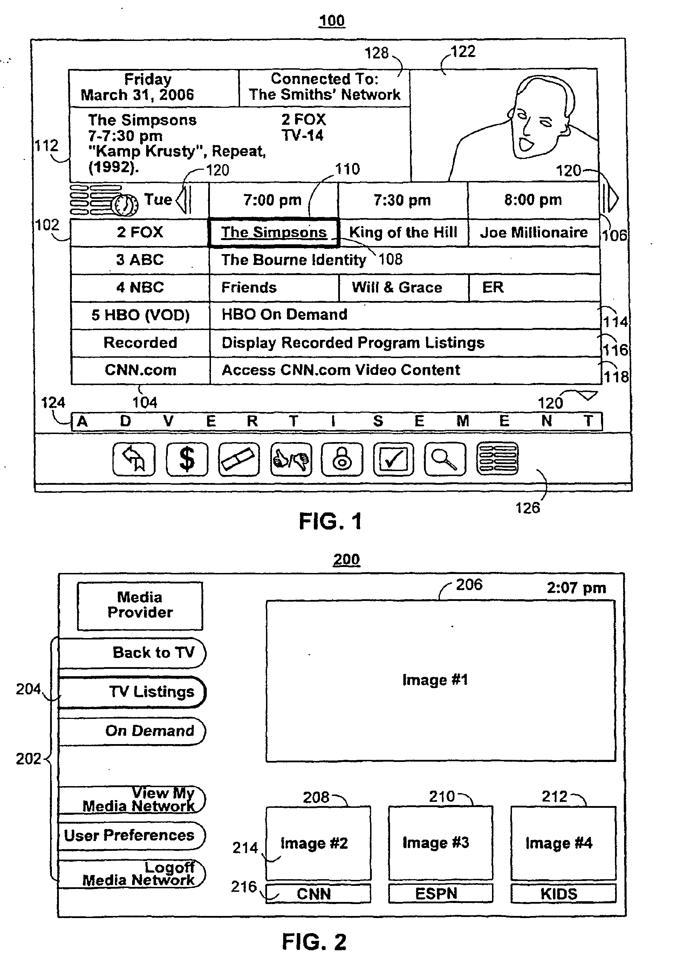

One of the functions of the media guidance application is to provide media listings and media information to users. FIGS. 1-6 show illustrative display screens that may be used to provide media guidance, and in particular media listings. The display screens shown in FIGS. 1-6 may be implemented on any suitable device or platform. While the displays of FIGS. 1-6 are illustrated as full screen displays, they may also be fully or partially overlaid over media content being displayed. A user may indicate a desire to access media information by selecting a selectable option provided in a display screen (e.g., a menu option, a listings option, an icon, a hyperlink, etc.) or pressing a dedicated button (e.g., a GUIDE button) on a remote control or other user input interface or device. In response to the user's indication, the media guidance application may provide a display screen with media information organized in one of several ways, such as by time and channel in a grid, by time, by channel, by media type, by category (e.g., movies, sports, news, children, or other categories of programming), or other predefined, user-defined, or other organization criteria.

FIG. 1 shows illustrative grid program listings display 100 arranged by time and channel that also enables access to different types of media content in a single display. Display 100 may include grid 102 with: (1) a column of channel/media type identifiers 104, where each channel/media type identifier (which is a cell in the column) identifies a different channel or media type available; and (2) a row of time identifiers 106, where each time identifier (which is a cell in the row) identifies a time block of programming. Grid 102 also includes cells of program listings, such as program listing 108, where each listing provides the title of the program provided on the listing's associated channel and time. With a user input device, a user can select program listings by moving highlight region 110. Information relating to the program listing selected by highlight region 110 may be provided in program information region 112. Region 112 may include, for example, the program title, the program description, the time the program is provided (if applicable), the channel the program is on (if applicable), the program's rating, and other desired information.

In addition to providing access to linear programming provided according to a schedule, the media guidance application also provides access to non-linear programming which is not provided according to a schedule. Non-linear programming may include content from different media sources including on-demand media content (e.g., VOD), Internet content (e.g., streaming media, downloadable media, etc.), locally stored media content (e.g., video content stored on a digital video recorder (DVR), digital video disc (DVD), video cassette, compact disc (CD), etc.), or other time-insensitive media content. On-demand content may include both movies and original media content provided by a particular media provider (e.g., HBO On Demand providing "The Sopranos" and "Curb Your Enthusiasm"). HBO ON DEMAND, THE SOPRANOS, and CURB YOUR ENTHUSIASM are trademarks owned by the Home Box Office, Inc. Internet content may include web events, such as a chat session or Webcast, or content available on-demand as streaming media or downloadable media through an Internet web site or other Internet access (e.g. FTP).

Grid 102 may provide listings for non-linear programming including on-demand listing 114, recorded media listing 116, and Internet content listing 118. A display combining listings for content from different types of media sources is sometimes referred to as a "mixed-media" display. The various permutations of the types of listings that may be displayed that are different than display 100 may be based on user selection or guidance application definition (e.g., a display of only recorded and broadcast listings, only on-demand and broadcast listings, etc.). As illustrated, listings 114, 116, and 118 are shown as spanning the entire time block displayed in grid 102 to indicate that selection of these listings may provide access to a display dedicated to on-demand listings, recorded listings, or Internet listings, respectively. In other embodiments, listings for these media types may be included directly in grid 102. Additional listings may be displayed in response to the user selecting one of the navigational icons 120. (Pressing an arrow key on a user input device may affect the display in a similar manner as selecting navigational icons 120.)

Display 100 may also include video region 122, advertisement 124, options region 126, and user media network identification region 128. User media network identification region 128 may identify the user media network the program guide is currently associated with. Video region 122 may allow the user to view and/or preview programs that are currently available, will be available, or were available to the user. The content of video region 122 may correspond to, or be independent from, one of the listings displayed in grid 102. Grid displays including a video region are sometimes referred to as picture-in-guide (PIG) displays. PIG displays and their functionalities are described in greater detail in Satterfield et al. U.S. Patent No. 6,564,378, issued May 13, 2003, and Yuen et al. U.S. Patent No. 6,239,794, issued May 29, 2001, which are hereby incorporated by reference herein in their entireties. PIG displays may be included in other media guidance application display screens of the present invention.

Advertisement 124 may provide an advertisement for media content that, depending on a viewer's access rights (e.g., for subscription programming), is currently available for viewing, will be available for viewing in the future, or may never become available for viewing, and may correspond to or be unrelated to one or more of the media listings in grid 102. Advertisement 124 may also be for products or services related or unrelated to the media content displayed in grid 102. Advertisement 124 may be selectable and provide further information about media content, provide information about a product or a service, enable purchasing of media content, a product, or a service, provide media content relating to the advertisement, etc. Advertisement 124 may be targeted based on a user's profile/preferences, monitored user activity, the type of display provided, or on other suitable targeted advertisement bases.

While advertisement 124 is shown as rectangular or banner shaped, advertisements may be provided in any suitable size, shape, and location in a guidance application display. For example, advertisement 124 may be provided as a rectangular shape that is horizontally adjacent to grid 102. This is sometimes referred to as a panel advertisement. In addition, advertisements may be overlaid over media content or a guidance application display or embedded within a display. Advertisements may also include text, images, rotating images, video clips, or other types of media content. Advertisements may be stored in the user equipment with the guidance application, in a database connected to the user equipment, in a remote location (including streaming media servers), or on other storage means or a combination of these locations. Providing advertisements in a media guidance application is discussed in greater detail in, for example, Ward, III et al. U.S. Patent No. 6,756,997, issued June 29, 2004, and Schein et al. U.S. Patent No. 6,388,714, issued May 14, 2002 . It will be appreciated that advertisements may be included in other media guidance application display screens of the present invention.

Options region 126 may allow the user to access different types of media content, media guidance application displays, and/or media guidance application features. Options region 126 may be part of display 100 (and other display screens of the present invention), or may be invoked by a user by selecting an on-screen option or pressing a dedicated or assignable button on a user input device. The selectable options within options region 126 may concern features related to program listings in grid 102 or may include options available from a main menu display. Features related to program listings may include searching for other air times or ways of receiving a program, recording a program, enabling series recording of a program, setting a program and/or channel as a favorite, purchasing a program, or other features. Options available from a main menu display may include search options, VOD options, parental control options, access to various types of listing displays, subscribe to a premium service, edit a user's profile, access a browse overlay, or other options.

The media guidance application may be personalized based on a user's preferences. A personalized media guidance application allows a user to customize displays and features to create a personalized "experience" with the media guidance application. This personalized experience may be created by allowing a user to input these customizations and/or by the media guidance application monitoring user activity to determine various user preferences. Users may access their personalized guidance application by logging in or otherwise identifying themselves to the guidance application. Customization of the media guidance application may be made in accordance with a user profile. The customizations may include varying presentation schemes (e.g., color scheme of displays, font size of text, etc.), aspects of media content listings displayed (e.g., only HDTV programming, user-specified broadcast channels based on favorite channel selections, reordering the display of channels, recommended media content, etc.), desired recording features (e.g., recording or series recordings for particular users, recording quality, etc.), parental control settings, and other desired customizations.

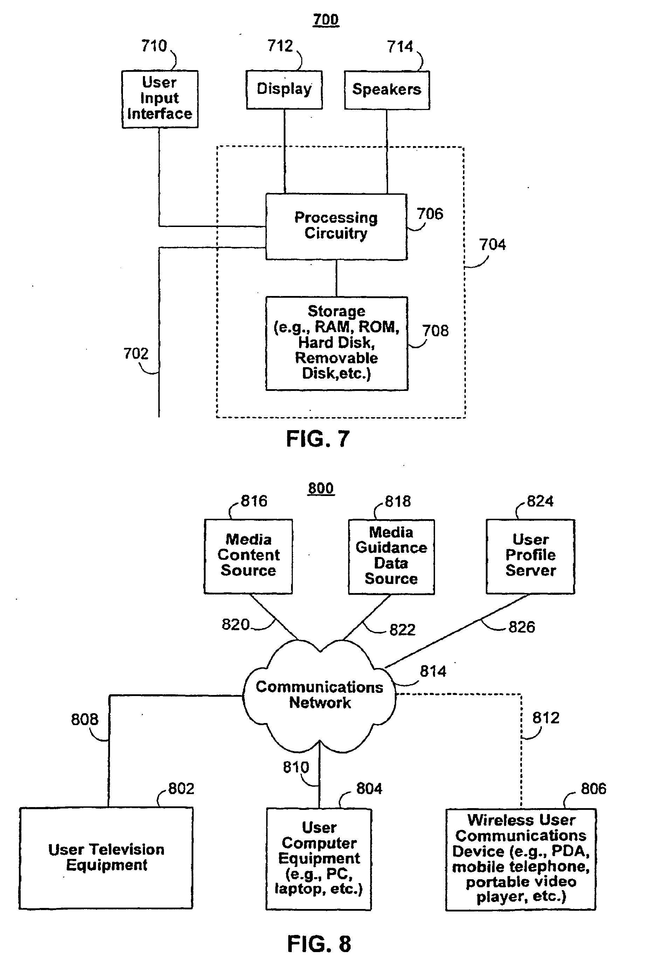

The media guidance application may allow a user to provide user profile information or may automatically compile user profile information. The media guidance application may, for example, monitor the media the user accesses and/or other interactions the user may have with the guidance application. Additionally, the media guidance application may obtain all or part of other user profiles that are related to a particular user (e.g., from other web sites on the Internet the user accesses, such as www.tvguide.com, from other media guidance applications the user accesses, from other interactive applications the user accesses, from a handheld device of the user, etc.), and/or obtain information about the user from other sources that the media guidance application may access. As a result, a user can be provided with a unified guidance application experience across the user's different devices. This type of user experience is described in greater detail below in connection with FIG. 8.

Another display arrangement for providing media guidance is shown in FIG. 2. Video mosaic display 200 includes selectable options 202 for media content information organized based on media type, genre (e.g., News, Sports, Kids, Local), and/or other organization criteria. In display 200, television listings option 204 is selected, thus providing listings 206, 208, 210, and 212 as broadcast program listings. Unlike the listings from FIG. 1, the listings in display 200 are not limited to simple text (e.g., the program title) and icons to describe media. Rather, in display 200 the listings may provide graphical images including cover art, still images from the media content, video clip previews, live video from the media content, or other types of media that indicate to a user the media content being described by the listing. Each of the graphical listings may also be accompanied by text to provide further information about the media content associated with the listing. For example, listing 208 may include more than one portion, including media portion 214 and text portion 216. Media portion 214 and/or text portion 216 may be selectable to view video in full-screen or to view program listings related to the video displayed in media portion 214 (e.g., to view listings for the channel that the video is displayed on).

The listings in display 200 are of different sizes (i.e., listing 206 is larger than listings 208, 210, and 212), but if desired, all the listings may be the same size. Listings may be of different sizes or graphically accentuated to indicate degrees of interest to the user or to emphasize certain content, as desired by the media provider or based on user preferences.

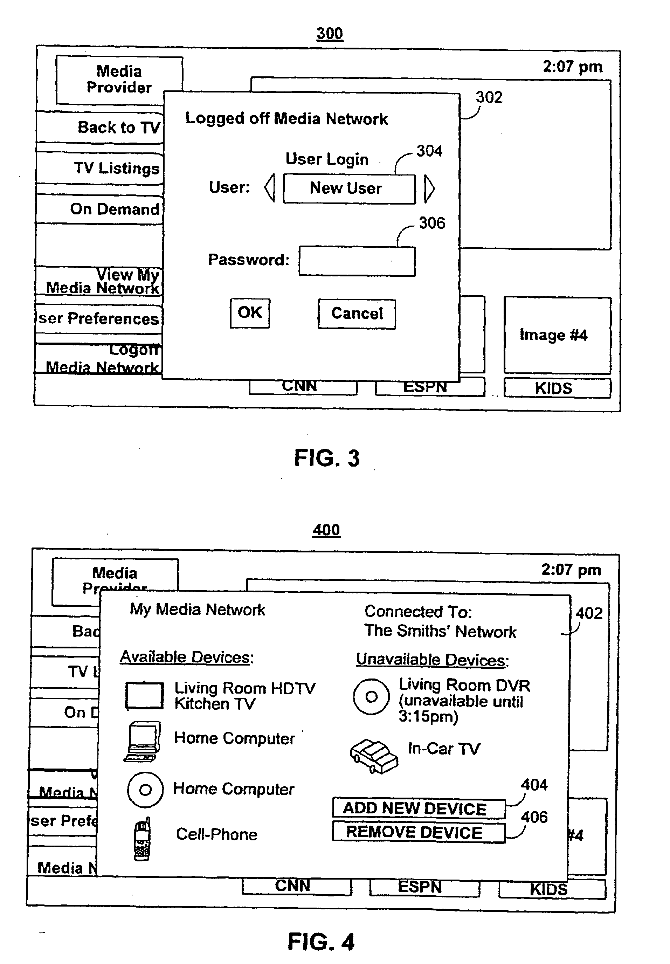

Selectable options 202 may also include user media network options such as View My Media Network, User Preferences and/or Logoff Media Network options. View My Media Network option may be used to view a list of user equipment devices that are associated with the current user media network. The View My Media Network option may also be used to add or remove devices from a user's media network. The User Preferences option may be used to access a user preference menu allowing the user to modify user preference and user personalization options associated with the user's media network and/or the device the media guidance application is associated with. The Logoff Media Network option may be used to log off of the user media network the media guidance application is currently associated with, and/or to log on to a different user media network. Further access features for user media networks are discussed in connection with FIG. 3.

FIG. 3 shows an illustrative login picture-in-picture display 302 that allows a user to log in to a user media network. Login display 302 may be presented in response to a user selection of the Logoff Media Network menu option 202 of FIG. 2, for example. Login display 302 may include a user selection field 304 and a password field 306. A user may enter a username or other identifier in user selection field 304 by using the arrow buttons to the left and right of field 304 to toggle between the names of users that have recently used the user equipment device. A user may alternatively type a username or identifier into field 304, or use other appropriate means to identify themselves to the user equipment device. An optional password field 306 may be used to confirm the identity of the user logging on.

The login feature may be required in order to associate a user equipment device with a user's media network. A user may be required to log in to her media network the first time she uses a user equipment device. The act of logging into the user's media network may permanently associate the device with the user's media network by storing an identifier of the device in the user's media network profile information. The act of logging in may also download at least part of the profile information associated with the user's media network onto the user equipment device, allowing the user to access her personalization and preference options and her media content information from the device. The device may remain associated with the media network until the user removes the device from her media network.

Alternatively, the user may be required to login to her media network every time she uses the user equipment device in order to confirm her identity to the device and/or to her media network. In the case of shared devices that may be used by multiple users, for example, logging into the user's media network may ensure that the correct user's profile information is loaded onto the equipment device. Other means of logging onto the device may be used. For example, the device may automatically detect the identity of the user using the equipment device based on the user's interactions with the device, and in response to the automatic detection, may prompt the user to confirm her identity or automatically log on to the user's media network.

FIG. 4 shows an illustrative picture-in-picture display 402 of a user's media network allowing a user to view user equipment devices associated with the user's media network. The devices associated with the user's media network may be displayed according to the device types (e.g., television, PC, recording device, cell-phone), and according to whether the devices are currently available or unavailable.

Devices may be unavailable if, for example, they are turned off, they are not currently connected to the network, they are being used by other users, or they are performing background functions such as a scheduled recording. A device may also be marked as unavailable if the device, or features of the device, cannot be accessed from the device the media network is being accessed from. A device may not be accessible because of limitations of the device or limitations imposed by service providers. For example, a cell-phone device may be indicated as unavailable on the user's home television system because the set-top box may not be capable of accessing recordings stored on the phone or scheduling recordings on the phone. In another embodiment, the cell-phone device may be indicated as unavailable because of limitations imposed by telephone service and/or television service providers. For example, limitations imposed by a cell-phone telephone service provider may bar users from scheduling recordings on home television systems using the users' cell-phones. The service providers may limit cross-device functionality and may make such functionality available to users having both their phone service and television service with the same provider, for example. Alternatively, full cross-device functionality may be available for an additional fee. In another embodiment, cross-device functionality may be limited by agreements that users may have entered into. For example, a user may have purchased a recording for playback on a single device, or on particular types of devices, but the recording and/or the device having the recording may be marked as unavailable if the user tries to access the recording from an unauthorized device.

Available devices which will become unavailable at a scheduled time may include indications of the time at which they will become unavailable. Similarly, unavailable devices that will become available at a scheduled time may include indications of their future availability. For example, a recording device that is currently recording a program may be listed as unavailable and may include an indication that the device will become available at a scheduled time (as shown). Conversely, a recording device that is currently available may contain an indication of when it will become unavailable (e.g., the start time of its next scheduled recording).

Display 402 may also include a menu option 404 for adding a new device to the network. Menu option 404 may be used to associate the user equipment device currently being used by the user with the user's media network. Menu option 404 may also be used to associate another device with the user's media network by, for example, requesting that the user identify the device to be associated with the network by providing an IP address or other unique identifier of the device. Menu option 406 may allow the user to remove a device from the user's media network. Menu option 406 may be used to disassociate the device being used by the user from the user's media network. Menu option 406 may also be used to disassociate other devices from the user's media network.

The selection of a device listed from display 402 may allow a user to access options relating to the device. The user may, for example, access a schedule of the device indicating times at which the device is scheduled to be available or unavailable. The user may also access options for sending a message for display on the device, for remotely controlling the device (e.g., for setting up a recording on a recording device), or for accessing other information relating to the device (e.g., for accessing a list of media content recorded on a recording device).

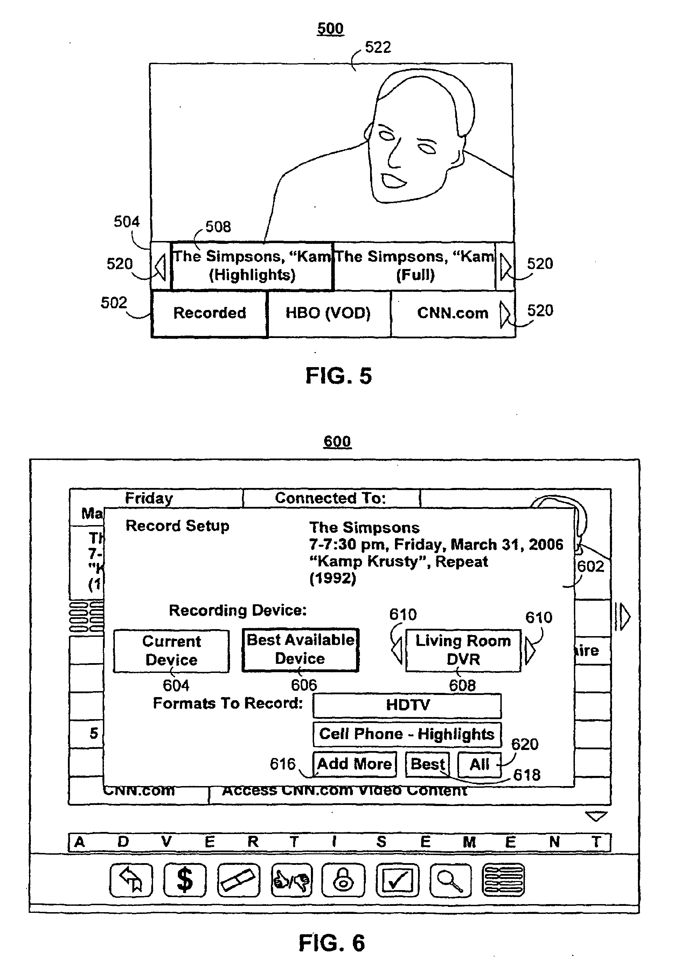

FIG. 5 shows an illustrative program listing display 500 for a portable device such as a cell-phone. Display 500 may include a first row 502 of media type identifiers and a second row 504 of media content listings associated with a selected media type identifier of row 502. Navigation arrows 520 allow users to navigate to media type and media content listings that are not displayed on display 500. In response to a user selecting a media type identifier from first row 502, the user may be presented with media content offerings of the selected type in second row 504. A user may navigate highlight region 508 in order to select media content and be presented with the media content, or information about the media content, in display region 522.

The information shown in display 500 may have been generated with user profile information associated with the user media network associated with the information displayed in display 100 of FIG. 1. Display 500 may include in row 502 similar channel/media type identifiers as those shown in column 104 of FIG. 1. However, as the user equipment device on which display 500 is being displayed may not have access to TV broadcasts, row 502 may not include the channel identifiers shown in column 104. As display 500 is smaller than display 100, less information may be displayed. For example, program information region 112, advertisement 124, options region 126, and user media network identification region 128 may therefore not be displayed on display 500.

In the illustrative embodiment shown in display 500, the media content listings shown in second row 504 include recorded media programs associated with the current user's media network. The media content listings include two different versions of the media program The Simpsons, "Kamp Krusty." The Full version of the media program may allow the user to access the entire media program. The Highlights version of the media program may allow the user to access an edited version of the media program. The Highlights version of the media program may have been edited in order to be viewed on a small sized display such as that of a portable device. The editing may include cropping unimportant parts of the Full version's video images, for example. The Highlights version of the media program may also have been edited in order to include only limited segments of the media program. The Highlights version may, for example, only include particularly entertaining segments of the Full version of the program.

A user having a user media network may remotely schedule recordings on any recording device associated with the media network. The user may schedule recordings from any device of the media network, whether or not the device has recording capabilities. The user may also schedule recordings or access other features of the media network from a web-interface or other user interface allowing the user to communicate with and access information about the media network. The web-interface or other user interface may run on a device of the media network or on a device that is not part of the media network. FIG. 6 shows an illustrative display 600 of a record-setup picture-in-picture display 602. Display 602 may be presented in response to the user selecting a Record option while highlight region 110 of FIG. 1 is located on program listing 108. Display 602 may allow the user to select to record media content on any recording device associated with the media network using selection arrows 610 and recording device selection option 608. Alternatively, the user may select to record the program on the device the user is currently using by selecting Current Device option 604, or on the most suitable device by selecting Best Available Device option 606. The user may also select one or more formats in which the media content should be recorded. As shown in display 602, a user may have selected to record media content in HDTV format and in a Cell Phone - Highlights format, corresponding to an edited version suitable for viewing on a cell-phone and containing only highlights of the program. A user may select additional formats to record the media content in using Add More option 616. A user may select to record the media content in the best available format(s) by selecting Best option 618. Best option 618 may allow the user to record the media content in the highest quality format the content is available in, or in the highest quality format available that can be viewed on the recording device or on any of the user equipment devices associated with the user's media network. A user may select to record the media content in all available formats by selecting All option 618. All option 618 may alternatively allow the user to record the media content in the available formats that are suitable for viewing on user equipment devices associated with the user's media network.

Users may access media content and the media guidance application (and its display screens described above and below) from one or more of their user equipment devices. FIG. 7 shows a generalized embodiment of illustrative user equipment device 700. More specific implementations of user equipment devices are discussed below in connection with FIG. 8. User equipment device 700 may receive media content and data via input/output (hereinafter "I/O") path 702. I/O path 702 may provide media content (e.g., broadcast programming, on-demand programming, Internet content, and other video or audio) and data to control circuitry 704, which includes processing circuitry 706 and storage 708. Control circuitry 704 may be used to send and receive commands, requests, and other suitable data using I/O path 702. I/O path 702 may connect control circuitry 704 (and specifically processing circuitry 706) to one or more communications paths (described below). I/O functions may be provided by one or more of these communications paths, but are shown as a single path in FIG. 7 to avoid overcomplicating the drawing.

Control circuitry 704 may be based on any suitable processing circuitry 706 such as processing circuitry based on one or more microprocessors, microcontrollers, digital signal processors, programmable logic devices, etc. In some embodiments, control circuitry 704 executes instructions for a media guidance application stored in memory (i.e., storage 708). In client-server based embodiments, control circuitry 704 may include communications circuitry suitable for communicating with a guidance application server or other networks or servers. Communications circuitry may include a cable modem, an integrated services digital network (ISDN) modem, a digital subscriber line (DSL) modem, a telephone modem, or a wireless modem for communications with other equipment. Such communications may involve the Internet or any other suitable communications networks or paths (which is described in more detail in connection with FIG. 8). In addition, communications circuitry may include circuitry that enables peer-to-peer communication of user equipment devices, or communication of user equipment devices in locations remote from each other (described in more detail below).

Memory (e.g., random-access memory, read-only memory, or any other suitable memory), hard drives, optical drives, or any other suitable fixed or removable storage devices (e.g., DVD recorder, CD recorder, video cassette recorder, or other suitable recording device) may be provided as storage 708 that is part of control circuitry 704. Storage 708 may include one or more of the above types of storage devices. For example, user equipment device 700 may include a hard drive for a DVR (sometimes called a personal video recorder, or PVR) and a DVD recorder as a secondary storage device. Storage 708 may be used to store various types of media described herein and guidance application data, including program information, guidance application settings, user preferences or profile information, or other data used in operating the guidance application. Nonvolatile memory may also be used (e.g., to launch a boot-up routine and other instructions).

Control circuitry 704 may include video generating circuitry and tuning circuitry, such as one or more analog tuners, one or more MPEG-2 decoders or other digital decoding circuitry, high-definition tuners, or any other suitable tuning or video circuits or combinations of such circuits. Encoding circuitry (e.g., for converting over-the-air, analog, or digital signals to MPEG signals for storage) may also be provided. Control circuitry 704 may also include scaler circuitry for upconverting and downconverting media into the preferred output format of the user equipment 700. Circuitry 704 may also include digital-to-analog converter circuitry and analog-to-digital converter circuitry for converting between digital and analog signals. The tuning and encoding circuitry may be used by the user equipment to receive and to display, to play, or to record media content. The tuning and encoding circuitry may also be used to receive guidance data. The circuitry described herein, including for example, the tuning, video generating, encoding, decoding, scaler, and analog/digital circuitry, may be implemented using software running on one or more general purpose or specialized processors. Multiple tuners may be provided to handle simultaneous tuning functions (e.g., watch and record functions, picture-in-picture (PIP) functions, multiple-tuner recording, etc.). If storage 708 is provided as a separate device from user equipment 700, the tuning and encoding circuitry (including multiple tuners) may be associated with storage 708.

A user may control the control circuitry 704 using user input interface 710. User input interface 710 may be any suitable user interface, such as a remote control, mouse, trackball, keypad, keyboard, touch screen, touch pad, stylus input, joystick, voice recognition interface, or other user input interfaces. Display 712 may be provided as a stand-alone device or integrated with other elements of user equipment device 700. Display 712 may be one or more of a monitor, a television, a liquid crystal display (LCD) for a mobile device, or any other suitable equipment for displaying visual images. In some embodiments, display 712 may be HDTV-capable. Speakers 714 may be provided as integrated with other elements of user equipment device 700 or may be stand-alone units. The audio component of videos and other media content displayed on display 712 may be played through speakers 714. In some embodiments, the audio may be distributed to a receiver (not shown), which processes and outputs the audio via speakers 714.

User equipment device 700 of FIG. 7 can be implemented in system 800 of FIG. 8 as user television equipment 802, user computer equipment 804, wireless user communications device 806, or any other type of user equipment suitable for accessing media, such as a non-portable gaming machine. For simplicity, these devices may be referred to herein collectively as user equipment or user equipment devices. User equipment devices, on which a media guidance application is implemented, may function as a standalone device or may be part of a network of devices. Various network configurations of devices may be implemented and are discussed in more detail below.

User television equipment 802 may include a set-top box, an integrated receiver decoder (IRD) for handling satellite television, a television set, a digital storage device, a DVD recorder, a video-cassette recorder (VCR), a local media server, or other user television equipment. One or more of these devices may be integrated to be a single device, if desired. User computer equipment 804 may include a PC, a laptop, a tablet, a WebTV box, a personal computer television (PC/TV), a PC media server, a PC media center, or other user computer equipment. WEBTV is a trademark owned by Microsoft Corp. Wireless user communications device 806 may include PDAs, a mobile telephone, a portable video player, a portable music player, a portable gaming machine, or other wireless devices.

It should be noted that with the advent of television tuner cards for PC's, WebTV, and the integration of video into other user equipment devices, the lines have become blurred when trying to classify a device as one of the above devices. In fact, each of user television equipment 802, user computer equipment 804, and wireless user communications device 806 may utilize at least some of the system features described above in connection with FIG. 7 and, as a result, include flexibility with respect to the type of media content available on the device. For example, user television equipment 802 may be Internet-enabled allowing for access to Internet content, while user computer equipment 804 may include a tuner allowing for access to television programming. The media guidance application may also have the same layout on the various different types of user equipment or may be tailored to the display capabilities of the user equipment. For example, on user computer equipment, the guidance application may be provided as a web site accessed by a web browser. In another example, the guidance application may be scaled down for wireless user communications devices.

In system 800, there is typically more than one of each type of user equipment device but only one of each is shown in FIG. 8 to avoid overcomplicating the drawing. In addition, each user may utilize more than one type of user equipment device (e.g., a user may have a television set and a computer) and also more than one of each type of user equipment device (e.g., a user may have a PDA and a mobile telephone and/or multiple television sets).

The user may also set various settings such as user profile settings to maintain consistent media guidance application settings across in-home devices and remote devices. Settings include those described herein, as well as channel and program favorites, programming preferences that the guidance application utilizes to make programming recommendations, display preferences, and other desirable guidance settings. For example, if a user sets a channel as a favorite on, for example, the web site www.tvguide.com on their personal computer at their office, the same channel would appear as a favorite on the user's in-home devices (e.g., user television equipment and user computer equipment) as well as the user's mobile devices, if desired. Therefore, changes made on one user equipment device can change the guidance experience on another user equipment device, regardless of whether they are the same or a different type of user equipment device. In addition, the changes made may be based on settings input by a user, as well as user activity monitored by the guidance application.

User profile information including user settings, user personalization, user preference, and user media content information may be stored on user equipment devices and/or on user profile server 824. User profile server 824 may be in communication with user equipment devices 802, 804 and 806 through communications path 826 and communications network 814. User profile server 824 may include storage devices for storing user profile information associated with user media networks. User profile server 824 may also include storage devices for storing media content information associated with user media networks including recordings of media content and/or lists of selected media content. User profile server 824 may include processors and communications circuits for managing user profile information, remotely controlling and communicating with user equipment devices, and exchanging user profile information with user equipment devices.

The user equipment devices may be coupled to communications network 814. Namely, user television equipment 802, user computer equipment 804, and wireless user communications device 806 are coupled to communications network 814 via communications paths 808, 810, and 812, respectively. Communications network 814 may be one or more networks including the Internet, a mobile phone network, mobile device (e.g., Blackberry) network, cable network, public switched telephone network, or other types of communications network or combinations of communications networks. BLACKBERRY is a trademark owned by Research In Motion Limited Corp. Paths 808, 810, and 812 may separately or together include one or more communications paths, such as, a satellite path, a fiber-optic path, a cable path, a path that supports Internet communications (e.g., IPTV), free-space connections (e.g., for broadcast or other wireless signals), or any other suitable wired or wireless communications path or combination of such paths. Path 812 is drawn with dotted lines to indicate that in the exemplary embodiment shown in FIG. 8 it is a wireless path and paths 808 and 810 are drawn as solid lines to indicate they are wired paths (although these paths may be wireless paths, if desired). Communications with the user equipment devices may be provided by one or more of these communications paths, but are shown as a single path in FIG. 8 to avoid overcomplicating the drawing.

Although communications paths are not drawn between user equipment devices, these devices may communicate directly with each other via communication paths, such as those described above in connection with paths 808, 810, and 812, as well other short-range point-to-point communication paths, such as USB cables, IEEE 1394 cables, wireless paths (e.g., Bluetooth, infrared, IEEE 802-11x, etc.), or other short-range communication via wired or wireless paths. BLUETOOTH is a trademark owned by Bluetooth SIG, INC. The user equipment devices may also communicate with each other directly through an indirect path via communications network 814.

System 800 includes media content source 816, media guidance data source 818, and user profile server 824 coupled to communications network 814 via communication paths 820, 822 and 826, respectively. Paths 820, 822 and 826 may include any of the communication paths described above in connection with paths 808, 810, and 812. Communications with the media content source 816, the media guidance data source 818 and the user profile server 824 may be exchanged over one or more communications paths, but are shown as a single path in FIG. 8 to avoid overcomplicating the drawing. In addition, there may be more than one of each of media content source 816, media guidance data source 818 and user profile server 824, but only one of each is shown in FIG. 8 to avoid overcomplicating the drawing. (The different types of each of these sources are discussed below.) If desired, media content source 816 and media guidance data source 818 may be integrated as one source device. Although communications between sources 816 and 818 and server 824 with user equipment devices 802, 804, and 806 are shown as through communications network 814, in some embodiments, sources 816 and 818 and server 824 may communicate directly with user equipment devices 802, 804, and 806 via communication paths (not shown) such as those described above in connection with paths 808, 810, and 812.

Media content source 816 may include one or more types of media distribution equipment including a television distribution facility, cable system headend, satellite distribution facility, programming sources (e.g., television broadcasters, such as NBC, ABC, HBO, etc.), intermediate distribution facilities and/or servers, Internet providers, on-demand media servers, and other media content providers. NBC is a trademark owned by the National Broadcasting Company, Inc., ABC, is a trademark owned by the ABC, INC., and HBO is a trademark owned by the Home Box Office, Inc. Media content source 816 may be the originator of media content (e.g., a television broadcaster, a Webcast provider, etc.) or may not be the originator of media content (e.g., an on-demand media content provider, an Internet provider of video content of broadcast programs for downloading, etc.). Media content source 816 may include cable sources, satellite providers, on-demand providers, Internet providers, or other providers of media content. Media content source 816 may also include a remote media server used to store different types of media content (including video content selected by a user), in a location remote from any of the user equipment devices. Systems and methods for remote storage of media content, and providing remotely stored media content to user equipment are discussed in greater detail in connection with Ellis et al., U.S. Patent Application No. 09/332,244, filed June 11, 1999, which is hereby incorporated by reference herein in its entirety.

Media guidance data source 818 may provide media guidance data, such as media listings, media-related information (e.g., broadcast times, broadcast channels, media titles, media descriptions, ratings information (e.g., parental control ratings, critic's ratings, etc.), genre or category information, actor information, logo data for broadcasters' or providers' logos, etc.), media format (e.g., standard definition, high definition, etc.), advertisement information (e.g., text, images, media clips, etc.), on-demand information, and any other type of guidance data that is helpful for a user to navigate among and locate desired media selections.

Media guidance application data may be provided to the user equipment devices using any suitable approach. In some embodiments, the guidance application may be a stand-alone interactive television program guide that receives program guide data via a data feed (e.g., a continuous feed, trickle feed, or data in the vertical blanking interval of a channel). Program schedule data and other guidance data may be provided to the user equipment on a television channel sideband, in the vertical blanking interval of a television channel, using an in-band digital signal, using an out-of-band digital signal, or by any other suitable data transmission technique. Program schedule data and other guidance data may be provided to user equipment on multiple analog or digital television channels. Program schedule data and other guidance data may be provided to the user equipment with any suitable frequency (e.g., continuously, daily, a user-specified period of time, a system-specified period of time, in response to a request from user equipment, etc.). In some approaches, guidance data from media guidance data source 818 may be provided to users' equipment using a client-server approach. For example, a guidance application client residing on the user's equipment may initiate sessions with source 818 to obtain guidance data when needed. Media guidance data source 818 may provide user equipment devices 802, 804, and 806 the media guidance application itself or software updates for the media guidance application.

Media guidance applications may be, for example, stand-alone applications implemented on user equipment devices. In other embodiments, media guidance applications may be client-server applications where only the client resides on the user equipment device. For example, media guidance applications may be implemented partially as a client application on control circuitry 704 of user equipment device 700 and partially on a remote server as a server application (e.g., media guidance data source 818). The guidance application displays may be generated by the media guidance data source 818 and transmitted to the user equipment devices. The media guidance data source 818 may also transmit data for storage on the user equipment, which then generates the guidance application displays based on instructions processed by control circuitry.

Media guidance system 800 is intended to illustrate a number of approaches, or network configurations, by which user equipment devices and sources of media content and guidance data may communicate with each other for the purpose of accessing media and providing media guidance. The present invention may be applied in any one or a subset of these approaches, or in a system employing other approaches for delivering media and providing media guidance. The following three approaches provide specific illustrations of the generalized example of FIG. 8.

In one approach, user equipment devices may communicate with each other within a home network. User equipment devices can communicate with each other directly via short-range point-to-point communication schemes describe above, via indirect paths through a hub or other similar device provided on a home network, or via communications network 814. Each of the multiple individuals in a single home may operate different user equipment devices on the home network. As a result, it may be desirable for various media guidance information or settings to be communicated between the different user equipment devices. For example, it may be desirable for users to maintain consistent media guidance application settings on different user equipment devices within a home network, . Different types of user equipment devices in a home network may also communicate with each other to transmit media content. For example, a user may transmit media content from user computer equipment to a portable video player or portable music player.

In a second approach, users may have multiple types of user equipment by which they access media content and obtain media guidance. For example, some users may have home networks that are accessed by in-home and mobile devices. Users may control in-home devices via a media guidance application implemented on a remote device. For example, users may access an online media guidance application on a website via a personal computer at their office, or a mobile device such as a PDA or web-enabled mobile telephone. The user may set various settings (e.g., recordings, reminders, or other settings) on the online guidance application to control the user's in-home equipment. The online guide may control the user's equipment directly, or by communicating with a media guidance application on the user's in-home equipment.

In a third approach, users of user equipment devices inside and outside a home can use their media guidance application to communicate directly with media content source 816 to access media content. Specifically, within a home, users of user television equipment 804 and user computer equipment 806 may access the media guidance application to navigate among and locate desirable media content. Users may also access the media guidance application outside of the home using wireless user communications devices 806 to navigate among and locate desirable media content.

It will be appreciated that while the discussion of media content has focused on video content, the principles of media guidance can be applied to other types of media content, such as music, images, etc.

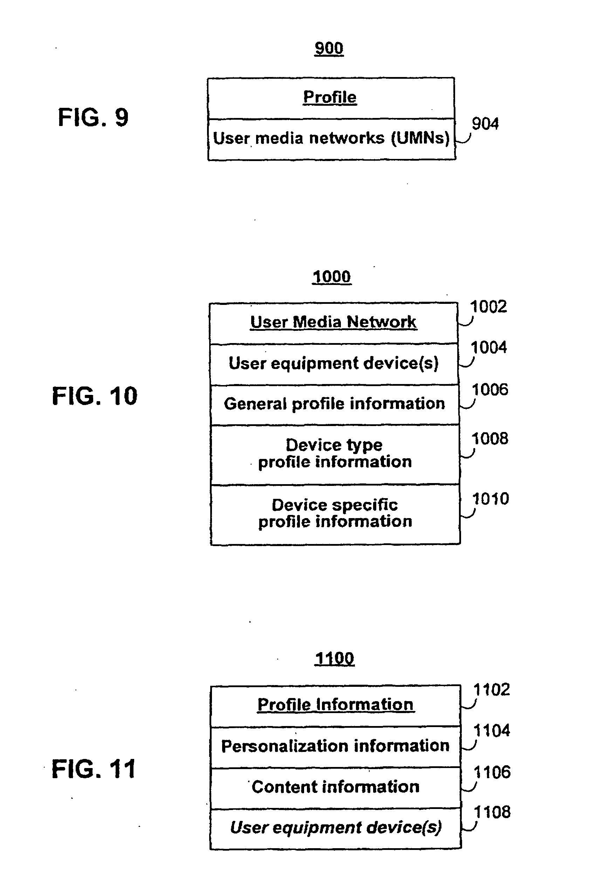

FIGS. 9-13 show illustrative embodiments of data structures that may be used in accordance with the principles of the present invention to store user profile information in memories of user equipment devices and user profile servers. The data structures of FIGS. 9-13 also show illustrative types of data that may be stored and used by systems providing management of user profiles. The data structures may be used to create and maintain a database of user equipment devices associated with users' media networks, and of user profile information for each media network. The data stored in the data structures may be stored in memories located in user equipment 802, 808 or 806, in one or more user profile servers 824, or on any other servers or devices accessible through communications network 814. The data may alternatively be distributed across different servers and devices, with, for example, device-specific profile information located on the devices the information corresponds to, and more general profile information stored on the user profile server. In one embodiment, the user profile server 824 may be operative to synchronize user profile information stored on the server with that stored on one or more user equipment devices. The profile server may thus be operative to communicate with the equipment devices, and to process the received profile information in order to maintain up-to-date profile information.

The information stored in the data structures of FIGS. 9-13 may include information based on settings input by a user, information based on user activity monitored by a guidance application or user equipment device or both.

FIG. 9 shows an illustrative embodiment of a profile data structure 900. Data structure 900 may include field 904 that includes a list of user media networks (UMNs) for which user profile information is stored in the data structure. Field 904 may be organized in the form of a linked list of UMN identifiers, an array of UMN identifiers, a table of UMN identifiers, or any other organization scheme of UMN identifiers. It will be appreciated that all fields in data structures of FIGS. 9-13 may be organized using any organization scheme. For simplicity, the organization scheme used to describe fields in the data structures of FIGS. 9-13 will be a list.

Each UMN listed in field 904 may be identified by a name and/or other unique identifier that may be used to uniquely identify and locate the UMN. The identifier may include, for example, a username or an equipment address that may be used to locate or identify the UMN on communications network 814. Additional information that may be included in UMN field 904 is described in more detail in connection with FIGS. 10-13.

FIG. 10 shows an illustrative embodiment of a user media network data structure 1000. Information for multiple UMNs may be stored on user equipment devices and profile servers, and thus multiple instances of UMN information data structure 1000, corresponding to different UMNs, may be required. Data structure 1000 may include field 1002 that may include a unique name, address and/or identifier corresponding to a particular UMN. Data structure 1000 may further include field 1004 which stores a list of all user equipment devices associated with the UMN. Data structure 1000 may also include fields 1006, 1008 and 1010 which respectively store general user profile information, device-type specific profile information, and device-specific profile information. Each of fields 1006, 1008 and 1010 may point to separate profile information data structures such as data structure 900 of FIG. 9. Note that while data structure 1000 has separate general, device-type specific and device-specific profile information data fields, data structure 1000 may have different combinations of profile information data fields than that shown in FIG. 10.

For example, in embodiments in which UMN data structure 1000 is stored on a user equipment device, data structure 1000 may include only a device-specific profile information field 1010 containing profile information for the specific device. In such an embodiment, the device-specific profile information data structure stored on the device may include all of the profile information that is stored in the general and device-type specific data fields 1006 and 1008 and that is useable by the user equipment device. In such an embodiment, the UMN data structure 1000 may include data field 1004 including a list of user equipment devices associated with the user media network if the equipment device is capable of communicating with other equipment devices. However, data field 1004 may be omitted in data structures stored on user equipment devices that cannot communicate with other equipment devices.

Each user equipment device (UED) listed in data field 1004 may have an associated UED data structure storing information about the user equipment device. The UED data structure may include information such as the device name, device address or other identifier of the location of the device, device type and device capabilities. The UED data structure may additionally include information regarding the device's availability. The device availability information may include information about the device's current availability, such as an indication of whether the device is powered on, available to receive commands, or busy performing other functions. The device availability information may also include device scheduling information. The device scheduling information may include information and commands used for scheduling functions on the device, as well as a schedule of times when the device is scheduled to be available or not available. The UED data structure may also include additional information for specific types of devices. For example, the data structure may store information about the total and remaining storage space on user recording devices, the types of data the recording may record (e.g., digital or analog video or audio data), and the quality of the recording.

FIG. 11 shows an illustrative embodiment of a profile information data structure 1100. Profile information data structure 1100 may include field 1102 that may include a unique name, address and/or identifier corresponding to the profile information data structure. Data structure 1100 may include personalization information field 1104 including user personalization data used in generating display screens, program recommendations, and other personalized menus and functions for users. Content information field 1106 may include information on media content stored by or otherwise available to the user. Data structure 1100 may also include a list of user equipment devices associated with the user media network in field 1108. The data in field 1108 may be used to enable communication between equipment devices, for example. The data in field 1108 may be identical, or substantially identical, to the information stored in field 1004 of FIG. 10. Thus, each user equipment device listed in field 1108 may have an associated UED data structure identical to, or substantially identical to, the UED data structures discussed in relation to field 1004.

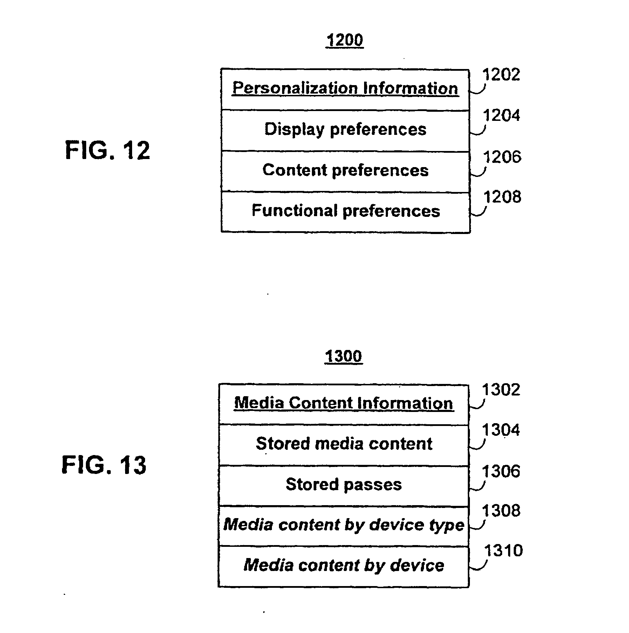

FIG. 12 shows an illustrative embodiment of a personalization information data structure 1200 used to store personalization information associated with a UMN. Data structure 1200 may include fields for storing display, content and functional preferences. Personalization information data structure 1200 may include field 1202 that may include a unique name, address and/or identifier corresponding to the personalization information data structure. Display preferences field 1204 may store preference information for personalizing the look and feel of a user's interactive guidance application interface. The information stored in field 1204 may be used in creating interactive guidance application displays and menus. Field 1204 may store user preference information regarding display modes (e.g., full-screen or picture-and-picture), modules (e.g., favorites, recorded media programs, recommended media programs), menu presentation (e.g., scroll menus, selection arrows), and menu options, for example. Field 1204 may also include information for personalizing a user's guidance application with skins, pictures, logos, colors, font type and size, and other display attributes.

Data structure 1200 may also include content preferences field 1206 which may include information regarding media content of interest to a user. Field 1206 may, for example, include lists of media programs, media types (e.g., movie, series, television specials), and program types (e.g., drama, action) of interest to the user. Functional preferences field 1208 may include information used by interactive program guides in performing functions automatically for a user. Functional preferences may include user default preferences (e.g., identifying a default recording device). Functional preferences may also include series passes, payment or account information, or other information used in accessing media content.

FIG. 13 shows an illustrative embodiment of a media content information data structure 1300. Media content information stored in data structure 1300 may include information on stored media content and stored passes for media content. Media content information data structure 1300 may include field 1302 that may include a unique name, address and/or identifier corresponding to the media content information data structure. Field 1304 may include a list of media content that has been recorded by the user. Each item of media content listed in field 1304 may have an associated data structure including the recorded media content and information about the recording. Information about the recording may include the recording title, media type, content type, and the recording quality. The information may also include the recording location, identifying the storage device and location in memory at which the recording is located. The information may also include an indication of the types of devices the recording may be displayed on.

Field 1306 may store information on passes that the user may have access to. The passes may allow users to access media content stored at other locations, such as media content stored on other users' media network or on content provider servers 816 such as video-on-demand sources.

Data structure 1300 may include additional fields storing lists of media content organized by device type or by device. Media content by device type field 1308 may store lists of media content that may be accessed from different types of devices. Field 1308 may, for example, include a first list of all media content a UMN has access to and that may be viewed on a television. Field 1308 may also include a second list of all media content that may be viewed on a cell-phone. Media content by device field 1310 may include a list of all media content stored on each device associated with the UMN. Field 1310 may, for example, store a first list of all media content stored on a digital video recorder and a second list of all media content stored on a personal media player.

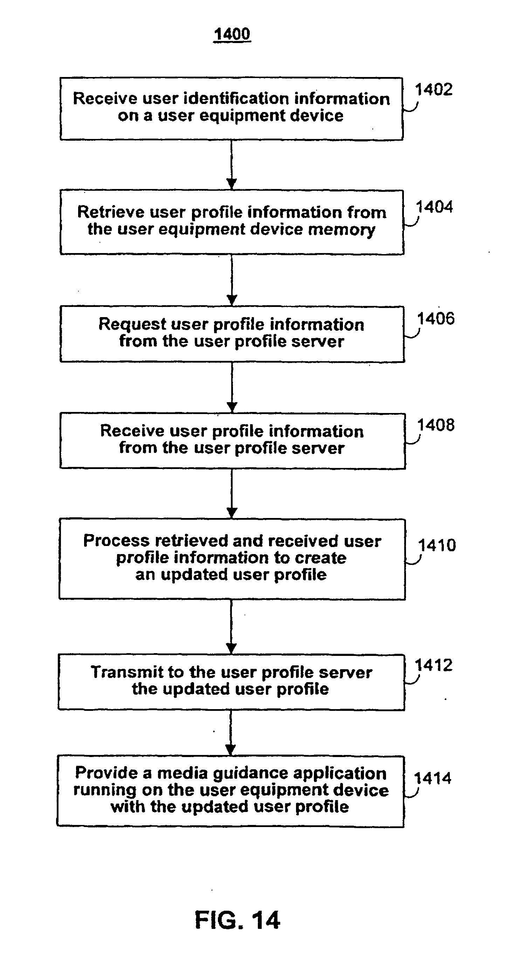

FIGS. 14-20 show exemplary flow diagrams illustrating various functions involved in the management of user profile information. The diagram of FIG. 14 shows an exemplary process 1400 for allowing a user at a user equipment device to log in to the user's media network. Process 1400 may involve receiving user identification information, retrieving profile information from the user equipment device memory, receiving profile information from the profile server, and creating an updated user profile based on the retrieved and received profile information. A user may be required to login to her media network at least the first time the media network is accessed from a particular user equipment device. The login process may be used to retrieve user profile information associated with the user's media network in order to create or update the user profile information stored on the user equipment device. The login process may be used to transmit to the user profile server updated user profile information including user profile information stored on the user equipment device. The login process may also be used to create a new user profile on a user equipment device, to create a new user profile with an associated user media network on a user profile server or both.

Process 1400 begins at step 1402 at which user identification information is received on a user equipment device such as device 802, 804 or 806. The user identification information may be received as part of a login process such as that shown in illustrative login display screen 300 of FIG. 3. The user identification information may include a username or other identifier used to uniquely identify a user or her media network. The user identification may optionally include password or other information used to confirm a user's identity. The user identification information may be received from a user for the purpose of logging into the user's media network, the purpose of logging into the user equipment device, or both.

At step 1404, user profile information associated with the user identification information received at step 1402 may be retrieved from a memory of the user equipment device such as storage element 708. If no user profile information is found, a new user profile may be created in the memory of the user equipment device.

The user equipment device may request user profile information associated with the user identification information at step 1406. The request for user profile information may include sending to the user profile server 824 the user identification information. The request may be sent through communications links 808, 810, 812 and 826 and through communications network 814. In some embodiments, the user equipment device may identify the user media network associated with the user identification information to the user profile server. In such an embodiment, the request for user profile information may include sending to the user profile server an identifier for the identified media network. In all embodiments, the request for user profile information may optionally include sending information about the equipment device's type and capabilities. The request may also include sending a name, address or other identifying information of the equipment device to the profile server. In some embodiments, the name, address or other identifying information of the equipment device may be used to add the user equipment device to the list of user equipment devices associated with the user's media network. In other embodiments, a device may be added to the list of devices associated with the user's media network only in response to a request for the device to be added.

At step 1408, user profile information associated with the user identification information is received from the user profile server. The information received may include all of the user profile information stored on the user profile server and associated with the identification information and the user's media network. Alternatively, only the information associated with the user equipment device being used, such as the information associated with the device and stored in field 1010 of data structure 1000, may be received. Alternatively, only that information associated with the type of device of the user equipment device being used, such as the information associated with the type of device and stored in field 1008 of data structure 1000, may be received. If there is no user media network associated with the user identification information received at step 1402, an indication of this fact may be received from the user profile server. If there is no user media network associated with the user identification information, the user may be prompted to enter new identification information or to create a new user media network. Alternatively, if there is no user media network associated with the user identification information, default user profile information may be received.

At step 1410, the user profile information retrieved from the user equipment device memory and the user profile information received from the user profile server are processed and merged to create an updated user profile. The updated user profile may include a combination of the received user profile information and the retrieved user profile information. The merging of the user profiles may involve identifying conflicting user profile information in the received and retrieved information, and determining which parts of the conflicting information are most recent or most reliable. Information reliability may be measured as a function of whether the information was inputted by the user or determined by monitoring user activity and behavior, for example. Information may be considered to be more reliable if inputted by the user. The updated user profile may contain the most up-to-date version of conflicting information, the most reliable version of the information, or a combination of the most up-to-date and most reliable.

At step 1412, the updated user profile may optionally be transmitted to the user profile server. The updated user profile information may be transmitted to the user profile server immediately upon completion of step 1410. Alternatively, the updated user profile information may be transmitted to the user profile server at a later time. For example, the updated user profile information may be transmitted to the profile server in response to a request for user profile information received from the user profile server.

Note that while the processing of user profile information to create the updated user profile is described as occurring on the user equipment device 802, 804 or 806 in process 1400, the processing and merging of the information may occur on user profile server 824, on a user profile management server, on processing circuitry located at another location, or on a combination of equipment devices and servers. In embodiments in which the processing occurs on a server such as profile server 824, steps 1404-1412 may be modified so that user profile information stored on the user equipment device is transmitted to the user profile server, the information is processed and merged on the server with the information stored on the server, and the updated user profile information is finally received and stored by the user equipment device. In such embodiments, step 1404-1412 may resemble steps 1504-1512 of synchronization process 1500 described below.

Process 1400 ends at step 1414, in which a media guidance application running on the user equipment device is provided with the updated user profile information. The media guidance application may use the updated user profile information in providing media guidance to the user.

The login process illustratively shown in process 1400 may be used to access user profile information using a new user equipment device that has not previously been associated with the user's media network. The process may also be used to access user profile information from another user's device. For example, a user may desire to access her user profile information while using a friend's user equipment device. In this situation, process 1400 may allow the user to access her user profile information or recorded media content, to view recommended programs, or to use any other functionality provided by the interactive media guidance application using her profile information.

In practice, one or more steps shown in process 1400 may be combined with other steps, performed in any suitable order, modified, performed in parallel (e.g., simultaneously or substantially simultaneously) or deleted. For example, step 1402 may be omitted in certain embodiments in which a user equipment device is associated by default with particular user identification information and/or a particular user's media network. In such embodiments, the user's profile information may be retrieved from memory and requested from the profile server based on the default user identification information. For example, a household's set-top box may be associated by default with the household's identification information and/or media network. The set-top box may be associated with the default identification information or media network based on the set-top box's IP address, for example. Profile information may be retrieved and requested by the set-top box based on the default household's identity.

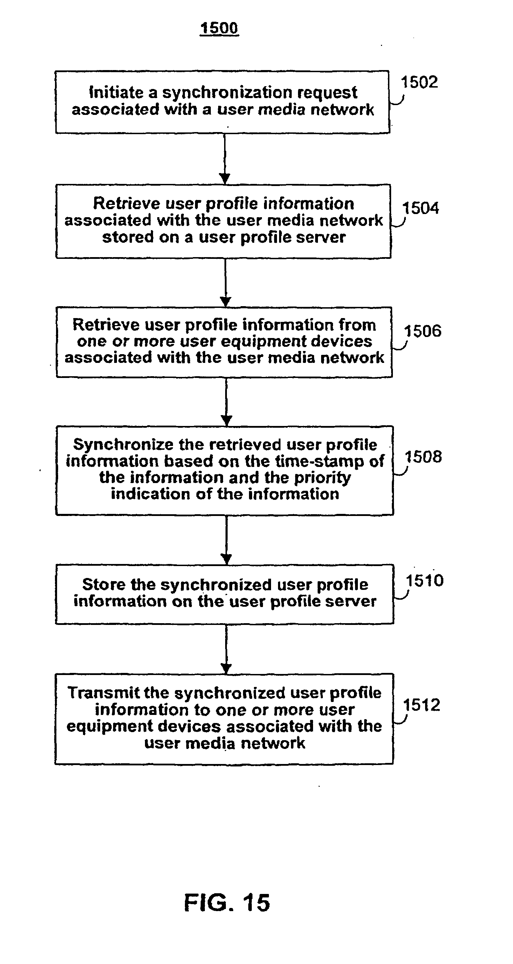

FIG. 15 shows illustrative process 1500 of a sequence of steps that may occur during the synchronization of user profile information between a user profile server 824 and one or more user equipment devices 802, 804 or 806 of a user media network. In particular, the sequence of steps in process 1500 may involve retrieving user profile information stored on multiple servers and devices, synchronizing the information to produce a synchronized profile including the most up-to-date profile information, and transmitting to the servers and devices the synchronized profile information.

At step 1502, the synchronization function is initiated by a synchronization request associated with a user media network. The synchronization request may be user initiated, or it may be initiated by a user equipment device, a user profile server, or other equipment associated with the user media network. A user may initiate a synchronization request by selecting a synchronization menu option in an interactive program guide display screen, by activating a synchronization button on a remote control device or a user equipment device, or through other appropriate means. The synchronization may also be automatically initiated by the user equipment device or the user profile server, for example in response to a new device being connected to the user media network, or to a user accessing the user profile information from a user equipment device not associated with the user's media network. The synchronization may also be automatically activated at regular intervals (e.g., once a month) or after changes have been made to user profile information on one or more devices or profile servers of the media network.

In response to the initiation of the synchronization, user profile information associated with the user media network is retrieved from the user profile server (step 1504) and from one or more user equipment devices associated with the user media network (step 1506). User profile information may be retrieved from all user equipment devices associated with the user media network or from those user equipment devices that are accessible at the time of the synchronization. User profile information may alternatively be retrieved from a limited number of user equipment devices associated with the media network. For example, the user profile information may be retrieved only from the user equipment device from which the synchronization request was received, from all user equipment devices except that from which the request was received, from a user-selected list of user equipment devices, or from user equipment devices having user profile information that has changed since the last synchronization operation took place.

At step 1508, the user profile information retrieved from the user profile server and user equipment devices is synchronized. The synchronization of the information may be substantially similar to the processing and merging of the user profile information described in the context of step 1410 of FIG. 14. The synchronization may involve organizing the user profile information in order to identify conflicting information, deleting duplicate or conflicting information, and cross-checking information associated with different categories of profile information. In a first instance, the retrieved user profile information may be organized into a profile data structure. The profile data structure may include duplicate copies or conflicting copies of information retrieved from different sources of profile information. The information in the profile data structure may be processed and merged to delete all duplicate information and to selectively delete conflicting information. In one embodiment of the invention, user profile information may include time-stamps indicating the time at which each element of information was last updated and/or accessed. Each element of user profile information may also contain priority information indicative of the reliability of the profile information. The reliability of the information may be measured as a function of whether the information was input by the user or determined by monitoring user activity and behavior, for example. Profile information based on user-inputted preference information may have a higher reliability than profile information based on monitoring of user activity. Higher reliability information, as well as the information most recently updated, may remain in the user profile while conflicting information with lower reliability and/or outdated time-stamps may be deleted.

The synchronization process may finally involve a cross-checking of the profile information. The cross-checking process may be used to ensure that user profile information stored in different sections of the profile information is consistent. The cross-checking may be used, for example, to ensure that an indication of a user's preferred recording device stored in the user profile information associated with one device (such as in the device's device-specific profile information stored in field 1010 of data structure 1000) is reflected in other devices' user profile information (e.g., in all other devices' device-specific profile information of field 1010), as well as in the general profile information (field 1006) and device-type profile information (field 1008) of the user's media network's profile information. The cross-checking may be used to complete the profile information stored in different fields of the user's profile information. The cross-checking may also be used to locate and merge conflicting profile information stored in different fields of the user's profile information.

At step 1510, the synchronized profile information may be stored on the user profile server. At step 1512, the synchronized profile information may be transmitted to one or more user equipment devices associated with the user media network. The synchronized profile information may be transmitted to the device that initiated the synchronization, to a selection of devices, or to all devices associated with the media network. The transmitted information may include all of the synchronized information. Alternatively, the transmitted information may include only a selection of the synchronized profile information including, for example, that profile information that is useable by the user equipment device the information is transmitted to.

In practice, one or more steps shown in process 1500 may be combined with other steps, performed in any suitable order, modified, performed in parallel (e.g., simultaneously or substantially simultaneously) or deleted. Process 1500 may occur on processing circuitry located on a user equipment device 802, 804 or 806, on user profile server 824, on a user profile management server or other specialized server, or on a combination of such devices and servers. The processing may also be distributed between such devices and servers. Communications network 814 may enable the devices and servers to exchange user profile information and other information and commands during process 1500.

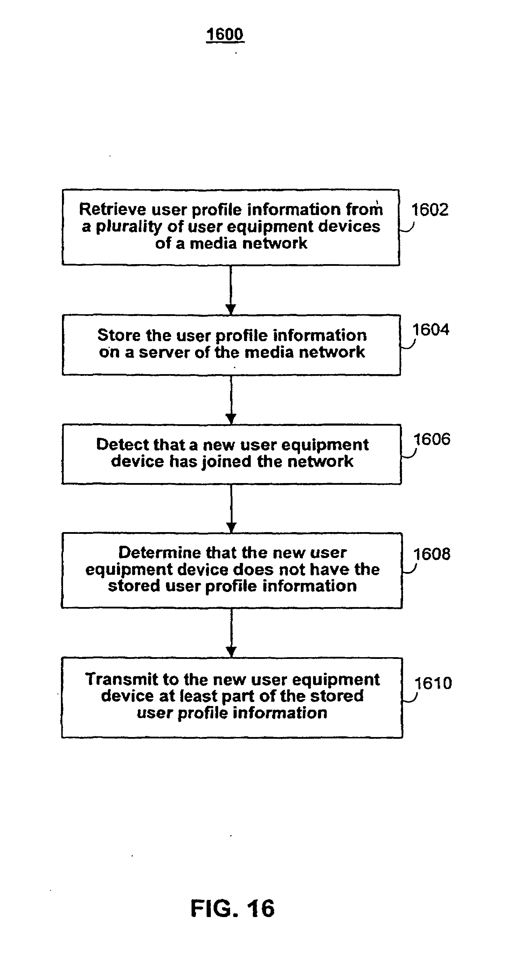

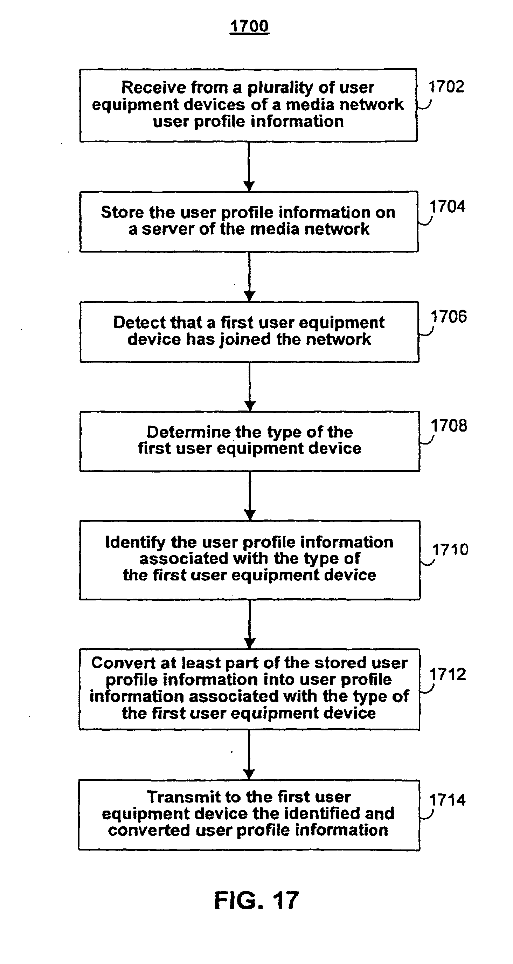

FIGS. 16 and 17 show illustrative processes 1600 and 1700 of sequences of steps for transmitting user profile information to user equipment devices associated with a user media network. Process 1600 involves transmitting user profile information to a new user equipment device. The sequence of steps in process 1600 may involve detecting that a new user equipment device has joined a user media network and does not have user profile information associated with the media network, and transmitting to the device the profile information.

At steps 1602 and 1604, user profile information is retrieved from a plurality of user equipment devices 802, 804 or 806 associated with a user media network and is stored on a server 824 associated with the media network. At step 1606, a new user equipment device of the media network is detected. The new user equipment device may be automatically detected when it is connected to the media network. The detection may rely on the new device automatically sending a message identifying itself. The detection may also rely on a user initiated action, such as a user instructing the new device to request profile information, for example in response to the user attempting to access her user profile information from the device. The detection may also be initiated by the profile server which may periodically scan the network to detect new devices.

Once the new user equipment has been detected, it may be determined at step 1608 that the new user equipment device does not have user profile information associated with the media network stored in its memory. In response to the determination, at least part of the user profile information associated with the user media network may be transmitted to the new user equipment device at step 1610. In some embodiments, all of the user profile information associated with the media network and stored on the profile server may be transmitted to the user equipment device at step 1610. In other embodiments, a selection of the user profile information stored on the profile server, such as that profile information associated with the device's type, may be transmitted to the user equipment device.

Process 1600 may be used, for example, to provide a new user equipment device with the user's profile information stored on the user profile server. The process may be used, for example, if the user replaces an outdated or broken device with a new replacement device. The process may also be used if the user adds an additional device to his media network, or if the user accesses his media network from a third party's device such as a friend's device or a public device. Process 1600 provides a convenient means for loading the user's profile information, including media content that is stored on the user profile server, onto the new device. In such an embodiment, user profile information may be retrieved from a first user equipment device at step 1602. A second user equipment device of the user media network that does not have the user profile information may be detected at steps 1606, and the user profile information of the first device may be transmitted to the second device at step 1610.

Process 1700 of FIG. 17 involves transmitting user profile information to a user equipment device of a particular type. The sequence of steps in process 1700 may involve detecting that a user equipment device has joined a user media network, detecting the type of the device, and transmitting to the device profile information associated with its type.

At steps 1702 and 1704, user profile information is received from a plurality of user equipment devices associated with a user media network and is stored on a server associated with the media network. At step 1706, a user equipment device having joined the media network is detected. The detection may occur by any of the means described in connection with step 1606 of process 1600, or by any other appropriate means. At step 1708, the type of the user equipment device is determined. The type of the device may be determined by a message automatically sent out by the device, or by the profile server prompting the device for information about its type. At step 1710, user profile information associated with the type of the user equipment device is identified for transmission to the device. The identified profile information may include profile information stored in the device-specific profile information corresponding to the device's type and stored in field 1008 of data structure 1000. Additional profile information may also be identified for transmission to the device. For example, general user profile information that is useable by multiple types of equipment devices, such as that stored in field 1006 of data structure 1000, may be identified. User profile information associated with other types of devices may also be converted into user profile information useable by the user equipment device (step 1712). The identified and/or converted user profile information is transmitted to the device at step 1714.

In practice, one or more steps shown in processes 1600 and 1700 may be combined with other steps, performed in any suitable order, modified, performed in parallel (e.g., simultaneously or substantially simultaneously) or deleted. For example, process 1600 may include additional steps substantially similar to steps 1708, 1710, and/or 1712 in order to determine the type of the new user equipment device and to provide the device with user profile information related to the type of the device. As a further example, process 1700 may include a step similar to step 1608 for determining that the user equipment device does not already have the user profile information. As another example, in embodiments in which user equipment devices can communicate directly with each other, the processes 1600 and 1700 may operate without a user profile server. In such embodiments, the user profile information may not be stored on the user profile server, but may instead be transmitted directly from user equipment devices of the media network to the device receiving the profile information.

Processes 1600 and 1700 may occur on processing circuitry located on user profile server 824, or on a user profile management server or other specialized server. The processes may also occur at least in part on one or more user equipment devices 802, 804, 806, or on a combination of user equipment devices and servers.

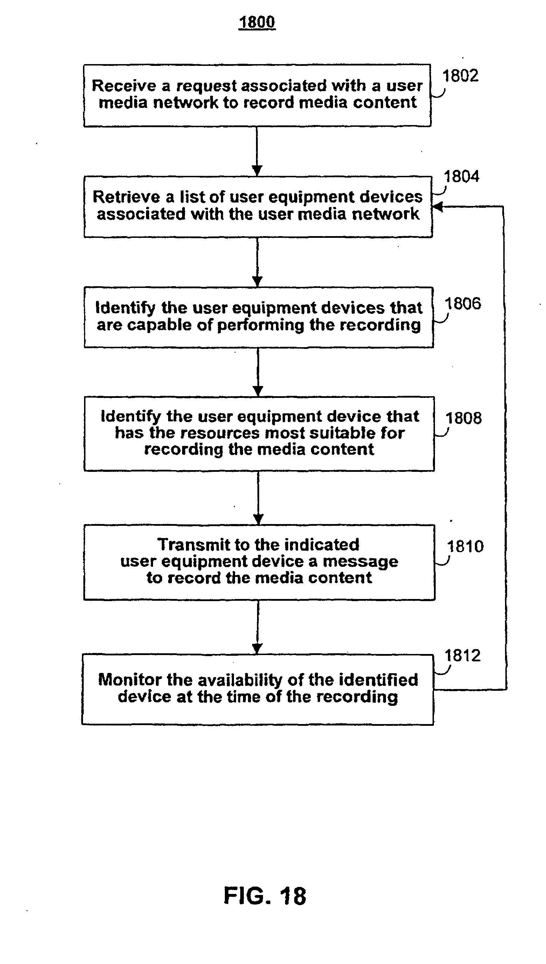

FIG. 18 shows illustrative process 1800 of a sequence of steps for setting up a recording on the most suitable device of a user media network. In particular, the sequence of steps in process 1800 may involve receiving a request to record media content on a media network, identifying the user equipment device of the media network most suitable for performing the recording, and transmitting to the identified equipment device a message to record the media content. Process 1800 may be invoked if a user selects to record media content using the Best Available Device option 606 described in connection with FIG. 6, for example.

At step 1802, a request associated with a user media network to record media content is received. The request may be received from a user equipment device 802, 804 or 806 associated with the media network or from any other source. The request may be received in response to a user selecting the Best Available Device recording option 606 described in connection with FIG. 6, for example. The request may also be received in response to a user recording command, in particular if the user's profile information indicates that the user's default recording device should be the best available device. The request may include indications of one or more times and channels the media content will be available from and/or of one or more formats the media should be recorded in.

A list of user equipment devices associated with the user media network may be retrieved at step 1804, and the user equipment devices that are capable of performing the requested recording are identified at step 1806. The list of user equipment devices associated with the media network may be retrieved from user profile information stored on the user profile server 824 or on one or more user equipment devices 802, 804, or 806 associated with the user media network. The identification of recording devices at step 1806 may include a first step of identifying all recording devices associated with the media network, and a second step of identifying those recording devices that are capable of performing the particular recording. Those devices capable of performing the particular recording may be those devices that can record the type of media and the format of the media requested to be recorded. The devices may be those devices that are scheduled to be available at the time of the recording and expected to have sufficient available memory to store the recording. Other criteria may also be evaluated in selecting devices capable of performing the recording.

At step 1808, the user equipment device with the resources most suitable for recording the media content may be identified. The suitability of the device may be evaluated in terms of whether the device will be available for recording at the time the media content will be available. The device may be unavailable because of a previously scheduled recording conflicting with the requested recording, because a user is using the device, or because the device will be turned off or off-line at the recording time, for example. The suitability may also be evaluated in terms of whether the device is capable of recording the media content at the requested quality, or in the requested one or more formats. The suitability may also be evaluated in terms of whether the device has sufficient storage space. In addition, the suitability may be influenced by whether a device is indicated as a preferred recording device in the user's profile information. The suitability may also be influenced by the device from which the recording request was received. In some embodiments, the most suitable device may be the device from which the request was received unless that device will not be available at the scheduled time, is not capable of recording the media content at the requested quality, or in the requested one or more formats, or is otherwise unable to perform the request.

At step 1810, a message may be transmitted to the identified user equipment device to record the media content. The message may be a request to schedule a recording on the device, the message being transmitted in advance of the recording start time. The message may alternatively be a request for recording that is transmitted at the recording start time.

At step 1812, the availability of the identified device may be monitored to ensure that the device is available at the time the media content is available, and to ensure that the identified device records the media content. If the identified device is not available or does not record the selected media content, process 1800 may loop back to step 1804 in order to identify another device the recording may be performed on.

Process 1800 may be performed by processing circuitry located on user profile server 824, on a specialized recording management server, on a general purpose server, on user equipment device 802, 804, or 806, on other appropriate servers or devices, or on a combination of such devices and servers. The processing circuitry may communicate with user equipment devices and servers involved in process 1800 over communications network 814 and communications links 808, 810, 812, and 826.

In practice, one or more steps shown in process 1800 may be combined with other steps, performed in any suitable order, modified, performed in parallel (e.g., simultaneously or substantially simultaneously) or deleted. For example, an additional step following step 1808 may include prompting the user for confirmation that the media content should be recorded on the identified device. Step 1809 may include allowing the user to modify or cancel recordings previously scheduled on other devices in order to make the other devices available to record the media content.

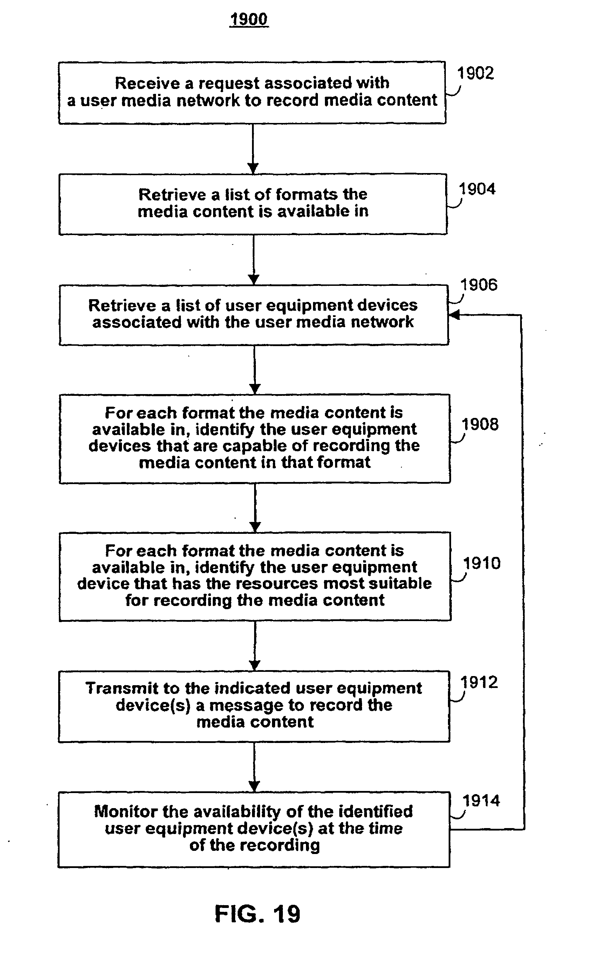

FIG. 19 shows illustrative process 1900 of a sequence of steps for setting up a recording on a user's media network of media content in one or more media formats. In particular, the sequence of steps in process 1900 may involve receiving a request to record media content, identifying user equipment devices of the media network suitable for recording the media content in selected media formats, and transmitting to the devices messages to record the media content.

A request associated with a user media network to record media content may be received at step 1902. The request may be received in response to a user selecting one or more formats to be recorded while setting up a recording using menu screen 602 of FIG. 6, for example. The request may also be received in response to the user selecting Add More option 616, Best option 618, or All option 620 described in connection with of FIG. 6.

At step 1904, a list of formats the media content is available in is retrieved. The list of formats may be stored as part of media information stored on media content source 816, on media guidance data source 818, in media guidance information stored in memory 708 of a user equipment device, or in another appropriate location. Media formats may include different quality formats such as HDTV format, widescreen, stereo, and surround-sound, as well as formats utilizing different codecs, bitrates, and digital rights management rules, for example. Media formats may include formats in which content has been edited for display on different types of media devices. The editing may include cropping of the video image to fit on a different sized display. The editing may include creating a shortened (or lengthened) version of a media program excluding particular portions of the media content (or including additional content). For example, the editing may include creating a Highlights format of the media content including only limited segments of the media content. Alternatively, the editing may include creating a Special Features format of the media content including additional content such as directors comments, actor interviews, and other supplemental information. The editing may also include creating a purely audio version of video content for playback on a personal media player such as an MP3 player.

At step 1906, a list of user equipment devices associated with the user's media network is retrieved. At step 1908, for each format the media content is available in, user equipment devices capable of recording the media in that format are identified. Note that some user equipment devices, such as digital video recorders, may be capable of recording the media content in all formats. However, some equipment devices may only be capable of recording the media in particular formats.

At step 1910, for each format the media content is available in, the user equipment device most suitable for recording the media content in the format is identified. The suitability of a device may be evaluated in manners similar to those described in connection with step 1808 of process 1800. The suitability of a device may also be determined by other factors. For example, the suitability of a recording device may be influenced by the device on which the recording is most likely to be watched. For example, a cell-phone may be the most suitable device for recording media content in a format created for playback on cell-phones, as the media content will quite likely be watched on the user's cell-phone. Recording the content on the cell-phone allows the user to watch the content on the cell-phone at the time of his choosing without having to wait for the content to be transmitted to his cell-phone.

At step 1912, a message may be transmitted to each identified user equipment device to record the media in the media format the device was identified for. At step 1914, the devices on which the recordings are to take place may be monitored to ensure that they are available and that they record the media when the media is available.

In practice, one or more steps shown in process 1900 may be combined with other steps, performed in any suitable order, modified, performed in parallel (e.g., simultaneously or substantially simultaneously) or deleted. For example, an additional step following step 1910 may include prompting the user for confirmation that the media content should be recorded on the identified devices. As another example, step 1904 may be replaced with a step of verifying that the media is available in the one or more formats the user requested that the media content be recorded in at step 1902. Steps 1908 and 1910 may be modified to be performed for each format the media content was requested to be recorded in. As yet another example, processes 1800 and 1900 may be combined to provide the user with the functionality to record media content on the most suitable device(s) in one or more formats.

Process 1900 may be performed by processing circuitry located on user profile server 824, on a specialized recording management server, on a general purpose server, on user equipment device 802, 804, or 806, on other appropriate servers or devices, or on a combination of such devices and servers. The processing circuitry may communicate with user equipment devices and servers involved in process 1800 over communications network 814 and communications links 808, 810, 812, and 826.

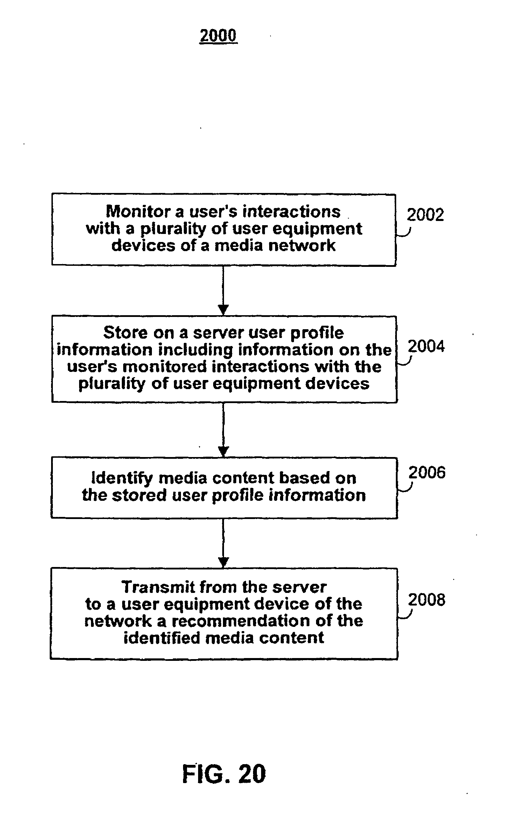

FIG. 20 shows illustrative process 2000 of a sequence of steps for providing a recommendation to a user using an interactive media guidance application based on the user's monitored interactions with a plurality of user equipment devices of a media network. In particular, the sequence of steps in process 2000 may involve monitoring a user's interactions with a plurality of user equipment devices, identifying media content based on the monitored interactions, and providing a recommendation of the identified media content.

At step 2002, a user's interactions with a plurality of user equipment devices 802, 804 or 806 of the user's media network are monitored. The monitoring may include storing lists of media content that the user has shown an interest in, for example by accessing or recording the media content, by requesting additional information about the media content, by flagging the media content as being of interest, or by any other appropriate means. The monitoring may include storing lists of media content that the user has shown a lack of interest in, for example by tuning away from the media content after having watched it for a limited amount of time. The monitoring may also include identifying types and categories of media that the user has shown interest or lack of interest in. The monitoring data may form part of the user profile information associated with the user's media network. The monitoring data may be stored in storage 708 of the user equipment device or in any other appropriate location.

At step 2004, user profile information including information on the user's monitored interactions with the plurality of user equipment devices is stored on a profile server such as server 824.

At step 2006, media content may be identified based on the stored user profile information including the stored monitoring data. The identified media content may be content that is determined to likely be of interest to the user. The identified media may be similar to media the user has shown interest in, and/or dissimilar to media content the user has shown a lack of interest in. The identified media may also be of types or categories identified as being of interest to the user.

At step 2008, a recommendation of the identified media content is transmitted to a user equipment device of the network. The recommendation may be presented to the user by the user equipment device.

In practice, one or more steps shown in process 2000 may be combined with other steps, performed in any suitable order, modified, performed in parallel (e.g., simultaneously or substantially simultaneously) or deleted. For example, step 2006 may include identifying media content based on characteristics of the user equipment device to which the recommendation is transmitted to in step 2008. For example, media content may be identified based on its being suitable for playback on the type of device the recommendation will be transmitted to. The media content may also be identified based on whether the equipment device will be available at the time the media content of the recommendation will be available.

As another example, process 2000 may be modified to monitor a user's interactions on a first user equipment device, and to transmit to a second user equipment device a recommendation of media content identified based on the user's monitored interactions with the first device. In one embodiment, the first and second devices may be of the same type. In another embodiment, the first and second devices may be of different types. For example, a user may regularly watch a television series that is only available for a first type of device such as a mobile-phone (first device of a first type). The user's interactions with the mobile-phone may be monitored, and a broadcast television special related to the television series may be identified. The user may receive on his broadcast television (second device of a second type) a recommendation for the television special based on the user's having regularly watched the television series on the mobile-phone.

Process 2000 may occur on processing circuitry located on user profile server 824 or on a user profile management server or other specialized server. The processing may also occur in processing circuitry 706 of user equipment device 802, 804 or 806, or be distributed between processing circuitry located on appropriate servers and user equipment devices. Communications network 814 may enable the devices and servers to exchange user profile information and other information and commands during process 2000.

It will be understood that the foregoing is only illustrative of the principles of the present invention, and that various modifications can be made by those skilled in the art without departing from the scope of the present invention. The particular methods and circuit implementations shown herein are presented for purposes of illustration and not of limitation, and other constructions and embodiments can be used instead if desired.

## Claims

1. A method for recording media content on a suitable user equipment device among a plurality of user equipment devices in a user's media network, comprising:
storing on a server information describing resources of each of the plurality of user equipment devices, wherein the information describing resources comprises information about at least one of recording quality and format capabilities of each device;
receiving an indication for a user equipment device of the plurality of user equipment devices to record media content;
identifying, based on the stored information describing resources, a user equipment device from among those in the user's media network that has resources suitable for recording the media content, wherein suitability is evaluated in terms of device capability for at least one of recording quality and format; and
transmitting from the server to the identified user equipment device a message to record the media content.

2. The method of claim 1, wherein identifying the user equipment device that has resources suitable for recording the media content comprises:
determining the availability of at least one user equipment device of the plurality of user equipment devices to record media content, wherein determining the availability comprises determining whether the user equipment devices are scheduled for use at a time when the media content to be recorded will be available; and
identifying a user equipment device that has the resources most suitable for recording the media content based at least in part on the availability of the at least one user equipment device of the plurality of user equipment devices.

3. The method of claim 1, wherein storing information describing resources of each of the plurality of user equipment devices comprises storing information relating to at least one of: the available storage space on each device, the storage space that will be available on each device at the time the media content is to be recorded, the current status of each device, the expected status of each device at the time the media content is to be recorded, and the recording definition capabilities of each device.

4. The method of claim 1, wherein receiving an indication to record media content comprises receiving an indication to record media content generated by a user equipment device.

5. The method of claim 1, wherein receiving an indication to record media content comprises receiving an indication to record a series of television programs.

6. The method of claim 5, wherein identifying the user equipment device that has resources suitable for recording the media content comprises identifying a user equipment that has resources suitable for recording the entire series of television programs.

7. The method of claim 5, wherein identifying the user equipment device that has resources suitable for recording the media content comprises identifying a user equipment that has resources suitable for recording at least one episode of the series of television programs.

8. The method of claim 5, wherein identifying the user equipment device that has resources suitable for performing the request comprises identifying a user equipment device from among those in the user's media network that is capable of performing a series recording.

9. The method of claim 1, wherein receiving an indication to record media content comprises receiving an indication from a user equipment device of the plurality of user equipment devices.

10. The method of claim 1, wherein receiving an indication to record media content comprises receiving an indication from a device that is not part of the user's media network.

11. The method of claim 1, wherein receiving an indication comprises receiving an indication to record the media content on a particular user equipment device, the method further comprising notifying the user if the particular user equipment device is not the user equipment device that has the resources most suitable for recording the media content.

12. The method of claim 11, further comprising:
receiving an indication of a user equipment device other than the particular user equipment device on which to record the media content.

13. The method of claim 1, further comprising:
identifying to the user the user equipment device that has the resources most suitable for recording the media content.

14. The method of claim 1, wherein the received indication comprises a selection of at least one of format and quality in which the media content should be recorded.

15. A system for recording media content on a suitable user equipment device among a plurality of user equipment devices in a user's media network, the system implementing any one of claims 1-14.

## Patentansprüche

1. Verfahren zum Aufnehmen von Medieninhalten auf einem geeigneten Benutzergerät aus einer Vielzahl von Benutzergeräten in einem Mediennetzwerk des Benutzers, wobei das Verfahren beinhaltet:
das Speichern von Informationen, die Ressourcen eines jeden der Vielzahl von Benutzergeräten beschreiben, auf einem Server, wobei die Ressourcen beschreibenden Informationen Informationen über mindestens entweder die Aufnahmequalität oder die Formatmöglichkeiten jedes Gerätes umfassen;
das Empfangen einer Angabe zum Aufnehmen von Medieninhalten für ein Benutzergerät aus der Vielzahl von Benutzergeräten;
basierend auf den gespeicherten Ressourcen beschreibenden Informationen das Identifizieren eines Benutzergerätes aus den im Mediennetzwerk des Benutzers enthaltenen Geräten, das über zum Aufnehmen der Medieninhalte geeignete Ressourcen verfügt, wobei die Eignung hinsichtlich der Möglichkeiten des Gerätes in Bezug auf mindestens entweder die Aufnahmequalität oder das Format beurteilt wird; und
das Übertragen einer Nachricht zum Aufnehmen der Medieninhalte vom Server an das identifizierte Benutzergerät.

2. Verfahren nach Anspruch 1, wobei das Identifizieren des über zum Aufnehmen der Medieninhalte geeignete Ressourcen verfügende Benutzergerät beinhaltet:
das Bestimmen der Verfügbarkeit von mindestens einem Benutzergerät aus der Vielzahl von Benutzergeräten zum Aufnehmen von Medieninhalten, wobei das Bestimmen der Verfügbarkeit das Bestimmen umfasst, ob die Benutzergeräte zu einer Zeit, zu der die aufzunehmenden Medieninhalte verfügbar sein werden, zur Benutzung eingeplant sind; und
das Identifizieren eines Benutzergerätes, das über Ressourcen verfügt, die zum Aufnehmen der Medieninhalte am geeignetsten sind, basierend zumindest teilweise auf der Verfügbarkeit des mindestens einen Benutzergerätes aus der Vielzahl von Benutzergeräten.

3. Verfahren nach Anspruch 1, wobei das Speichern von die Ressourcen eines jeden der Vielzahl von Benutzergeräten beschreibenden Informationen das Speichern von Informationen bezüglich mindestens einem der Folgenden beinhaltet: dem verfügbaren Speicherplatz auf jedem Gerät, dem Speicherplatz, der zu der Zeit, zu der die Medieninhalte aufzunehmen sind, auf jedem Gerät verfügbar ist, dem aktuellen Status jedes Gerätes, dem erwarteten Status jedes Gerätes zu der Zeit, zu der die Medieninhalte aufzunehmen sind, und der Fähigkeit jedes Gerätes zur Aufnahmedefinition.

4. Verfahren nach Anspruch 1, wobei das Empfangen einer Angabe zum Aufnehmen von Medieninhalten das Empfangen einer Angabe zum Aufnehmen von Medieninhalten beinhaltet, die von einem Benutzergerät generiert wurde.

5. Verfahren nach Anspruch 1, wobei das Empfangen einer Angabe zum Aufnehmen von Medieninhalten das Empfangen einer Angabe zum Aufnehmen einer Serie von Fernsehsendungen beinhaltet.

6. Verfahren nach Anspruch 5, wobei das Identifizieren des über die zum Aufnehmen der Medieninhalte geeigneten Ressourcen verfügenden Benutzergerätes das Identifizieren eines Benutzergerätes beinhaltet, das zum Aufnehmen der gesamten Serie von Fernsehsendungen geeignet ist.

7. Verfahren nach Anspruch 5, wobei das Identifizieren des über die zum Aufnehmen der Medieninhalte geeigneten Ressourcen verfügenden Benutzergerätes das Identifizieren eines Benutzergerätes beinhaltet, das zum Aufnehmen von mindestens einer Folge der Serie von Fernsehsendungen geeignet ist.

8. Verfahren nach Anspruch 5, wobei das Identifizieren des über die zum Aufnehmen der Medieninhalte geeigneten Ressourcen verfügenden Benutzergerätes das Identifizieren eines Benutzergerätes aus den im Mediennetzwerk des Benutzers enthaltenen Geräten beinhaltet, das in der Lage ist, Serienaufnahmen durchzuführen.

9. Verfahren nach Anspruch 1, wobei das Empfangen einer Angabe zum Aufnehmen von Medieninhalten das Empfangen einer Angabe von einem Benutzergerät aus der Vielzahl von Benutzergeräten beinhaltet.

10. Verfahren nach Anspruch 1, wobei das Empfangen einer Angabe zum Aufnehmen von Medieninhalten das Empfangen einer Angabe von einem Gerät beinhaltet, das nicht zum Mediennetzwerk des Benutzers gehört.

11. Verfahren nach Anspruch 1, wobei das Empfangen einer Angabe das Empfangen einer Angabe zum Aufnehmen der Medieninhalte auf einem bestimmten Benutzergerät beinhaltet, wobei das Verfahren ferner das Benachrichtigen des Benutzers beinhaltet, wenn das bestimmte Benutzergerät nicht das Benutzergerät ist, welches über die Ressourcen verfügt, die zum Aufnehmen der Medieninhalte am geeignetsten sind.

12. Verfahren nach Anspruch 11, welches ferner beinhaltet:
das Empfangen einer Angabe eines Benutzergerätes, das nicht das bestimmte Benutzergerät ist, auf dem die Medieninhalte aufgenommen werden sollen.

13. Verfahren nach Anspruch 1, welches ferner beinhaltet:
dem Benutzer Anzeigen des Benutzergerätes, welches über die Ressourcen verfügt, die zum Aufnehmen der Medieninhalte am geeignetsten sind.

14. Verfahren nach Anspruch 1, wobei die empfangene Angabe eine Auswahl von mindestens entweder dem Format oder der Qualität beinhaltet, in welchem bzw. welcher die Medieninhalte aufgenommen werden sollten.

15. System zum Aufnehmen von Medieninhalten auf einem geeigneten Benutzergerät aus einer Vielzahl von Benutzergeräten in einem Mediennetzwerk des Benutzers, wobei das System jeden beliebigen der Ansprüche 1-14 implementiert.

## Revendications

1. Procédé pour enregistrer un contenu multimédia sur un dispositif d'équipement utilisateur approprié parmi une pluralité de dispositifs d'équipement utilisateur dans le réseau multimédia d'un utilisateur, comprenant :
le stockage, sur un serveur, d'informations décrivant des ressources de chacun parmi la pluralité de dispositifs d'équipement utilisateur, dans lequel les informations décrivant des ressources comprennent des informations concernant au moins la qualité d'enregistrement et/ou les capacités de format de chaque dispositif ;
la réception d'une indication, pour un dispositif d'équipement utilisateur parmi la pluralité de dispositifs d'équipement utilisateur, d'enregistrer un contenu multimédia ;
l'identification, en fonction des informations stockées décrivant des ressources, d'un dispositif d'équipement utilisateur, parmi ceux dans le réseau multimédia de l'utilisateur, qui possède des ressources appropriées pour enregistrer le contenu multimédia, dans lequel le caractère approprié est évalué du point de vue de la capacité de dispositif pour la qualité d'enregistrement et/ou le format ; et
la transmission, du serveur au dispositif d'équipement utilisateur identifié, d'un message pour enregistrer le contenu multimédia.

2. Procédé selon la revendication 1, dans lequel l'identification du dispositif d'équipement utilisateur qui possède des ressources appropriées pour enregistrer le contenu multimédia comprend :
la détermination de la disponibilité d'au moins un dispositif d'équipement utilisateur parmi la pluralité de dispositifs d'équipement utilisateur pour enregistrer un contenu multimédia, dans lequel la détermination de la disponibilité comprend la détermination que les dispositifs d'équipement utilisateur sont ordonnancés ou non pour l'utilisation à un instant auquel le contenu multimédia destiné à être enregistré sera disponible ; et
l'identification d'un dispositif d'équipement utilisateur qui possède les ressources les plus appropriées pour enregistrer le contenu multimédia en fonction au moins en partie de la disponibilité de l'au moins un dispositif d'équipement utilisateur parmi la pluralité de dispositifs d'équipement utilisateur.

3. Procédé selon la revendication 1, dans lequel le stockage d'informations décrivant des ressources de chacun parmi la pluralité de dispositifs d'équipement utilisateur comprend le stockage d'informations connexes à au moins un parmi : l'espace de stockage disponible sur chaque dispositif, l'espace de stockage qui sera disponible sur chaque dispositif à l'instant auquel le contenu multimédia est destiné à être enregistré, l'état actuel de chaque dispositif, l'état prévu de chaque dispositif à l'instant auquel le contenu multimédia est destiné à être enregistré, et les capacités de définition d'enregistrement de chaque dispositif.

4. Procédé selon la revendication 1, dans lequel la réception d'une indication d'enregistrer un contenu multimédia comprend la réception d'une indication d'enregistrer un contenu multimédia générée par un dispositif d'équipement utilisateur.

5. Procédé selon la revendication 1, dans lequel la réception d'une indication d'enregistrer un contenu multimédia comprend la réception d'une indication d'enregistrer une série de programme de télévision.

6. Procédé selon la revendication 5, dans lequel l'identification du dispositif d'équipement utilisateur qui possède des ressources appropriées pour enregistrer le contenu multimédia comprend l'identification d'un équipement utilisateur qui possède des ressources appropriées pour enregistrer la série entière de programmes de télévision.

7. Procédé selon la revendication 5, dans lequel l'identification du dispositif d'équipement utilisateur qui possède des ressources appropriées pour enregistrer le contenu multimédia comprend l'identification d'un équipement utilisateur qui possède des ressources appropriées pour enregistrer au moins un épisode de la série de programmes de télévision.

8. Procédé selon la revendication 5, dans lequel l'identification du dispositif d'équipement utilisateur qui possède des ressources appropriées pour réaliser la demande comprend l'identification d'un dispositif d'équipement utilisateur, parmi ceux dans le réseau multimédia de l'utilisateur, qui est capable de réaliser un enregistrement de série.

9. Procédé selon la revendication 1, dans lequel la réception d'une indication d'enregistrer un contenu multimédia comprend la réception d'une indication à partir d'un dispositif d'équipement utilisateur parmi la pluralité de dispositifs d'équipement utilisateur.

10. Procédé selon la revendication 1, dans lequel la réception d'une indication d'enregistrer un contenu multimédia comprend la réception d'une indication à partir d'un dispositif qui ne fait pas partie du réseau multimédia de l'utilisateur.

11. Procédé selon la revendication 1, dans lequel la réception d'une indication comprend la réception d'une indication d'enregistrer le contenu multimédia sur un dispositif d'équipement utilisateur particulier, le procédé comprenant en outre la notification à l'utilisateur si le dispositif d'équipement utilisateur particulier n'est pas le dispositif d'équipement utilisateur qui possède les ressources les plus appropriées pour enregistrer le contenu multimédia.

12. Procédé selon la revendication 11, comprenant en outre :
la réception d'une indication d'un dispositif d'équipement utilisateur autre que le dispositif d'équipement utilisateur particulier sur lequel le contenu multimédia doit être enregistré.

13. Procédé selon la revendication 1, comprenant en outre :
l'identification à l'utilisateur du dispositif d'équipement utilisateur qui possède les ressources les plus appropriées pour enregistrer le contenu multimédia.

14. Procédé selon la revendication 1, dans lequel l'indication reçue comprend une sélection du format et/ou de la qualité dans lequel/à laquelle le contenu multimédia doit être enregistré.

15. Système pour enregistrer un contenu multimédia sur un dispositif d'équipement utilisateur approprié parmi une pluralité de dispositifs d'équipement utilisateur dans le réseau multimédia d'un utilisateur, le système réalisant une quelconque des revendications 1 à 14.
